(19) 

Europäisches
Patentamt
European
Patent Office
Office européen
des brevets

(11) **EP 4 390 521 A1**

(12) **EUROPEAN PATENT APPLICATION**
published in accordance with Art. 153(4) EPC

(43) Date of publication:
**26.06.2024 Bulletin 2024/26**

(21) Application number: **22869011.1**

(22) Date of filing: **29.08.2022**

(51) International Patent Classification (IPC):
**G02C 7/08** (2006.01)      **G02C 7/02** (2006.01)
**G02B 26/08** (2006.01)

(52) Cooperative Patent Classification (CPC):
**G02B 26/08; G02C 7/02; G02C 7/08; G02F 1/13;
G02F 1/1343**

(86) International application number:
**PCT/CN2022/115406**

(87) International publication number:
**WO 2023/040638 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2021 CN 202111101862**

(71) Applicant: **Huawei Technologies Co., Ltd.
Shenzhen, Guangdong 518129 (CN)**

(72) Inventors:
• **FAN, Zhixiang
  Shenzhen, Guangdong 518129 (CN)**

• **ZHANG, Youming
  Shenzhen, Guangdong 518129 (CN)**
• **SUN, Lifeng
  Shenzhen, Guangdong 518129 (CN)**
• **LIAO, Wenzhe
  Shenzhen, Guangdong 518129 (CN)**
• **FENG, Jun
  Shenzhen, Guangdong 518129 (CN)**

(74) Representative: **Gill Jennings & Every LLP
The Broadgate Tower
20 Primrose Street
London EC2A 2ES (GB)**

(54) **LENS, GLASSES, AND METHOD FOR ADJUSTING LENS**

(57) A lens (3), glasses, and a lens (3) adjustment method are provided. The lens (3) includes a first lens layer (3a). The first lens layer (3a) includes a plurality of liquid crystal regions (3021). At least one liquid crystal region (3021) forms a first optical region. At least one liquid crystal region (3021) forms a second optical region. Optical powers of the liquid crystal regions (3021) may be changed by controlling rotation of liquid crystal molecules in the liquid crystal regions (3021) separately included in the first optical region and the second optical region, so that an optical power of the first optical region can be different from an optical power of the second optical region. In this way, the optical power produced by the first optical region may correspond to a myopia degree of a user, and the optical power of the second optical region may correspond to a defocus degree. Therefore, when a gaze point of a human eye falls within the first optical region, clear distant vision can be obtained. The second optical region may provide defocus effect, to achieve effective myopia prevention and control effect for the human eye.

FIG. 5

**Description**

**CROSS-REFERENCE TO RELATED APPLICATIONS**

This application claims priority to Chinese Patent Application No. 202111101862.X, filed with the China National Intellectual Property Administration on September 18, 2021 and entitled "LENS, GLASSES, AND LENS ADJUSTMENT METHOD", which is incorporated herein by reference in its entirety.

**TECHNICAL FIELD**

This application relates to the field of technologies of optical devices, and in particular, to a lens, glasses, and a lens adjustment method.

**BACKGROUND**

Myopia is a very common vision problem. It is estimated that about 1.5 billion people suffer from myopia worldwide. In recent years, due to widespread popularity of consumer electronic products, a myopia rate of teenagers and children increases year by year. A myopia problem is particularly serious in China. According to data of the National Health Commission, more children have myopia at a younger age in recent years.

Currently, when myopia occurs, this is usually resolved by wearing myopia glasses. However, myopia glasses can only be used to resolve a distant vision problem. When reading and writing are performed in a short distance, myopia glasses make an object image focus more backward, which increases an eye-using burden in the short distance, thereby aggravating myopia and further impairing vision.

To alleviate a problem of aggravating myopia during wearing of the myopia glasses, a peripheral defocus theory is put forward. A specific added optical power is set in a peripheral defocus region of a lens (that is, a dioptric degree is reduced), so that incident light passing through the peripheral defocus region is converged in advance to cause myopic defocus, thereby preventing and controlling myopia aggravation. However, a position of a peripheral defocus region of current myopia glasses with a defocus design is fixed. The position of the peripheral defocus region cannot change with rolling of an eyeball. Therefore, the current myopia glasses are not applicable to eye-using scenarios with different gaze angles. As a result, a defocus function cannot be fully used. It is hard to tolerate defocus, and therefore, compliance is lowered, affecting myopia prevention and control effect. On this basis, providing a lens in which a position of a defocus region can be flexibly adjusted becomes an urgent problem to be resolved in the art.

**SUMMARY**

A purpose of this application is to provide a lens, glasses, and a lens adjustment method, to flexibly adjust a peripheral defocus region of the lens, thereby adapting to a requirement for tolerating a blur due to defocus after a gaze angle of a user changes.

According to a first aspect, this application provides a lens. The lens includes a first lens layer. The first lens layer includes a plurality of first liquid crystal regions. In this application, at least one first liquid crystal region may form a first optical region at the first lens layer, and at least one first liquid crystal region may form a second optical region at the first lens layer. The second optical region may be disposed around the first optical region. It may be understood that optical powers produced by first liquid crystal regions used to form the first optical region are the same, and optical powers produced by first liquid crystal regions used to form the second optical region are the same or different. An optical power of the first optical region is different from an optical power of the second optical region. In this way, the optical power produced by the first optical region may correspond to a myopia degree of a user, and the optical power of the second optical region may correspond to a defocus degree. Therefore, when a gaze point of a human eye falls within the first optical region, clear distant vision can be obtained. The second optical region may provide defocus effect, to achieve effective myopia prevention and control effect for the human eye.

In addition, in this application, as a position of the gaze point of the human eye on the lens changes, the liquid crystal regions included in the first optical region and the second optical region change. In this case, positions of the first optical region and the second optical region change accordingly. In this way, a personalized requirement for tolerating a blur due to defocus for the user can be met, to achieve effective myopia prevention and control effect.

When the first lens layer is specifically disposed, the first lens layer may further include a first substrate, a second substrate, a first electrode, and a second electrode. The first electrode is disposed on the first substrate. The second electrode is disposed on the second substrate. In this application, the second electrode includes a plurality of sub-electrode pairs. Each sub-electrode pair includes a first sub-electrode and a second sub-electrode. The second sub-electrode may be disposed as an annular electrode. In addition, the first sub-electrodes in all the sub-electrode pairs may be connected, so that voltages applied to the first sub-electrodes in the sub-electrode pairs are the same. In this way, there may be a voltage difference between the first sub-electrode and the second sub-electrode in each sub-electrode pair by adjusting a voltage applied to the second sub-electrode in each sub-electrode pair. In some other implementations of this application, the second sub-electrodes in all the sub-electrode pairs may be alternatively connected, so that voltages applied to the second sub-electrodes in the sub-electrode pairs are the same. In this way, there may be a voltage difference between the first sub-electrode and the second sub-electrode in each sub-electrode pair by adjusting a voltage applied to the first sub-electrode in each sub-electrode pair. This can effectively simplifies a structure of the first lens layer. In some other possible implementations of this application, voltages applied to the first sub-electrode and the second sub-electrode in each sub-electrode pair may be separately adjusted, so that a voltage difference between the first sub-electrode and the second sub-electrode in each sub-electrode pair is adjusted to implement independent control on a voltage difference of each sub-electrode pair.

In addition, in this application, the plurality of first liquid crystal regions are disposed between the first substrate and the second substrate, the plurality of first liquid crystal regions are disposed in a one-to-one correspondence with the plurality of sub-electrode pairs, and the second sub-electrode in each sub-electrode pair is correspondingly disposed for an edge of the first liquid crystal region. Each first liquid crystal region includes liquid crystal molecules. There is the voltage difference between the first sub-electrode and the second sub-electrode in each sub-electrode pair. In this way, the liquid crystal molecules in the first liquid crystal region may deflect under effect of the voltage difference between the first sub-electrode and the second sub-electrode in the corresponding sub-electrode pair, thereby generating a corresponding optical power.

If no liquid crystal molecule is distributed in a region between two adjacent first liquid crystal regions, an optical power of the region between the two first liquid crystal regions is 0. In a possible implementation of this application, the optical power produced by the first liquid crystal region in the first optical region may be 0. In this way, the entire first optical region may have a unified optical power, so that clear visual effect can be obtained at a gaze point falling in the first optical region.

In addition, in this application, the optical powers in the second optical region may be set to progressively increase in a direction from the first optical region to the second optical region, so that the second optical region can produce progressive defocus effect. This helps improve myopia prevention and control effect.

Setting the optical powers in the second optical region to progressively increase may be implemented by adjusting an optical power produced by each first liquid crystal region in the second optical region. During specific implementation, each first liquid crystal region located in the second optical region may produce one optical power, and the optical powers produced by the first liquid crystal regions may be the same or different. In this way, the optical powers of the first liquid crystal regions located in the second optical region may be set to progressively increase in the direction from the first optical region to the second optical region, so that the optical powers in the second optical region can be set to progressively increase.

In a possible implementation of this application, the lens may further include a second lens layer. The first lens layer and the second lens layer may be stacked, to meet requirements for optical powers of different optical regions of the lens by superposing optical powers of the first lens layer and the second lens layer. For example, the optical power of the first optical region of the first lens layer may be 0. In this case, the optical power of the second lens layer may be set to an eye-using optical power of the user, so that vision correction effect is provided by using the second lens layer. In addition, peripheral defocus effect of the lens may be implemented based on an optical power obtained after the optical power of the second optical region of the first lens and the optical power of the second lens layer are superposed.

When the second lens layer is specifically disposed, the second lens layer may be a solid-state concave lens layer. The second lens layer includes a first face and a second face that are disposed opposite to each other. The first face is a concave face. The second face is a flat face. The first lens layer may be located on a side that is of the second face and that is away from the first face. In addition, it may be understood that the first lens layer may be bonded to the second face of the second lens layer, or may be spaced from the second lens layer. In addition, another possible lens layer may be further disposed between the first lens layer and the second lens layer.

In some other possible implementations of this application, the second lens layer may alternatively include two solid-state lenses. The two solid-state lenses each have a curved face. The curved faces of the two solid-state lenses are disposed at least partially relative to each other. In this way, the optical power of the second lens layer may be obtained by superposing optical powers of the two solid-state lenses. In addition, because the curved faces of the two solid-state lenses are disposed at least partially relative to each other, as the two solid-state lenses move in a staggered manner, parts that are of the curved faces of the two solid-state lenses and that are disposed relative to each other may move in a staggered manner, so that an optical power of a superimposed part of the two solid-state lenses changes, thereby changing the optical power of the second lens layer.

The second lens layer may be alternatively provided with a liquid lens layer. The second lens layer may include a third substrate, a fourth substrate, and a baffle. The third substrate and the fourth substrate are disposed relative to each other. At least one of the third substrate and the fourth substrate is an elastic thin-film substrate. In addition, the baffle may be disposed between the third substrate and the fourth substrate, and the baffle may be disposed around in a circle along edges of the third substrate and the fourth substrate. The baffle is connected to the third substrate and the fourth substrate, to enclose a closed liquid storage chamber among the third substrate, the fourth substrate, and the baffle. The liquid storage chamber is filled with an optical liquid. The baffle may be further provided with a liquid inlet and outlet passage. The liquid inlet and outlet passage is configured to add the optical liquid into the liquid storage chamber, and may also be configured to drain the optical liquid from the liquid storage chamber. Because at least one of the third substrate and the fourth substrate is an elastic thin-film substrate, as a volume of the optical liquid in the liquid storage chamber changes, support force of the optical liquid for the elastic thin-film substrate changes, so that curvature of the elastic thin-film substrate changes. In this way, the second lens layer produces the corresponding optical power.

In a possible implementation of this application, the second lens layer is a liquid crystal lens layer. The second lens layer may include a third substrate, a fourth substrate, a third electrode, and a fourth electrode. The third electrode is disposed on the third substrate. The fourth electrode is disposed on the fourth substrate. The fourth electrode includes a third sub-electrode and a fourth sub-electrode. There is a voltage difference between the third sub-electrode and the fourth sub-electrode. In addition, a liquid crystal region is further disposed between the third substrate and the fourth substrate. The liquid crystal region includes liquid crystal molecules. The liquid crystal molecules may deflect with the voltage difference applied between the third sub-electrode and the fourth sub-electrode, thereby producing a corresponding optical power.

In addition, in a direction from a central region to a peripheral region, the second lens layer may include a plurality of sleeved annular Fresnel lobes. In this way, the third sub-electrode and the fourth sub-electrode may be respectively disposed at an inner ring and an outer ring of a corresponding annular Fresnel lobe, so that a plurality of sleeved annular voltage difference regions can be formed at the second lens layer. In addition, liquid crystal molecules in a second liquid crystal region corresponding to various annular voltage difference regions deflect under effect of a corresponding voltage difference, thereby producing a corresponding optical power.

It may be understood that the optical power produced by the second liquid crystal region corresponding to each annular voltage difference region may be changed by changing the voltage difference applied to each annular voltage difference region. On this basis, through an appropriate design, the optical powers produced in the second lens layer may be designed to progressively change in the direction from the central region to the peripheral region.

In a possible implementation of this application, at least one annular Fresnel lobe may further include a plurality of annular Fresnel sub-lobes. Optical powers of the plurality of annular Fresnel sub-lobes may be the same. The Fresnel lobe is further divided into the plurality of annular Fresnel sub-lobes, to implement progressive change effect of the optical powers produced in the second lens layer. In this way, image jump interference at the second lens layer can be effectively reduced, thereby improving comfortableness of a human eye.

In addition, in this application, the optical power of the second lens layer and a target object at which the human eye gazes may satisfy a relational function of a polynomial of a high degree in a single indeterminate. Therefore, the optical power of the second lens layer of the lens may change with a human-eye object-viewing distance according to the relational function of the polynomial of a high degree in a single indeterminate between the human-eye object-viewing distance and the optical power of the second lens layer. In this way, the second lens layer of the lens can adapt to a requirement of a change of a human-eye adjustment burden at different human-eye object-viewing distances, thereby improving myopia prevention and control effect of the lens.

According to a second aspect, this application further provides a lens adjustment method. A lens may include a first lens layer. The first lens layer may include a first substrate, a second substrate, a first electrode, and a second electrode. The first electrode is disposed on the first substrate. The second electrode is disposed on the second substrate. The second electrode includes a plurality of sub-electrode pairs. Each sub-electrode pair includes a first sub-electrode and a second sub-electrode. The first sub-electrodes or the second sub-electrodes of the sub-electrode pairs are connected. For each sub-electrode pair, there is a voltage difference between the first sub-electrode and the second sub-electrode. A plurality of liquid crystal regions are disposed between the first substrate and the second substrate. The plurality of liquid crystal regions are disposed in a one-to-one correspondence with the plurality of sub-electrode pairs. In addition, each liquid crystal region includes liquid crystal molecules. The liquid crystal molecules may deflect with a voltage difference of a corresponding sub-electrode pair. The lens adjustment method provided in this application may include:

> obtaining a position of a gaze point of a human eye on the first lens layer;
> determining positions of a first optical region and a second optical region based on the position of the gaze point on the first lens layer, where the gaze point is located in the first optical region, and the second optical region is located at a periphery of the first optical region;
> determining, based on the positions of the first optical region and the second optical region, a liquid crystal region included in the first optical region and a liquid crystal region included in the second optical region; and

controlling the liquid crystal region in the first optical region to produce a first optical power, and controlling the liquid crystal region in the second optical region to produce a second optical power, where the first optical power is different from the second optical power.

According to the lens adjustment method provided in this application, the positions of the first optical region and the second optical region may be determined by obtaining the position of the gaze point of the human eye on the first lens layer. In addition, the liquid crystal region in the first optical region and the liquid crystal region in the second optical region are controlled to respectively produce the corresponding optical powers, so that an optical power of the first optical region is different from that of the second optical region. Therefore, when the gaze point of the human eye falls in the first optical region, clear distant vision can be obtained. The second optical region may provide defocus effect, to achieve effective myopia prevention and control effect for the human eye. In addition, the position of the gaze point of the human eye on the lens may change when the human eye looks at an object at different gaze angles. In this case, the liquid crystal regions included in the first optical region and the second optical region may change. Therefore, positions of the first optical region and the second optical region on the lens may change with the position of the gaze point of the human eye, to meet a personalized requirement for tolerating a blur due to defocus for a user and achieve effective myopia prevention and control effect.

In a possible implementation of this application, the lens adjustment method may further include:

obtaining the optical power of the first optical region; and
obtaining the optical power of the second optical region.

Because the optical powers of the first optical region and the second optical region are produced by using the liquid crystal regions in the corresponding optical regions, a voltage difference applied to a corresponding liquid crystal region may be determined based on the obtained optical powers of the first optical region and the second optical region. The voltage difference is applied to a sub-electrode pair that is disposed in a correspondence with the liquid crystal region. In this way, liquid crystal molecules in the liquid crystal region deflect to produce a corresponding optical power.

In addition, the obtaining the optical power of the first optical region; and obtaining the optical power of the second optical region may include:

obtaining a target defocus degree and a target dioptric degree;
determining the optical power of the first optical region based on the target dioptric degree; and
determining the optical power of the second optical region based on the target defocus degree.

In this application, the target dioptric degree may correspond to a myopia degree of the human eye, and both the target dioptric degree and the target defocus degree may be input to the lens through a setting performed by the user. In this way, the optical power of the first optical region may be determined based on the target dioptric degree set by the user, and the optical power of the second optical region may be determined based on the target defocus degree, so that the first optical region and the second optical region can produce the corresponding optical powers to meet a use requirement of the user.

In a possible implementation of this application, controlling the liquid crystal region in the first optical region and the liquid crystal region in the second optical region to respectively produce the optical powers may include:

determining, based on the optical power of the first optical region, a first voltage difference corresponding to the optical power of the first optical region, where the first voltage difference is used to make the liquid crystal molecules in the liquid crystal region in the first optical region deflect;
controlling the first sub-electrode and the second sub-electrode that correspond to the liquid crystal region in the first optical region, to apply the first voltage difference to the liquid crystal region in the first optical region, so that the liquid crystal region in the first optical region produces the optical power;
determining, based on the optical power of the second optical region, a second voltage difference corresponding to the optical power of the second optical region, where the second voltage difference is used to make the liquid crystal molecules in the liquid crystal region in the second optical region deflect; and
controlling the first sub-electrode and the second sub-electrode that correspond to the liquid crystal region in the second optical region, to apply the second voltage difference to the liquid crystal region in the second optical region, so that the liquid crystal region in the second optical region produces the optical power.

An optical power produced by each liquid crystal region in the first optical region and the second optical region may be implemented by adjusting a voltage difference applied to the liquid crystal region. On this basis, the second optical region can produce progressive defocus effect by adjusting the optical powers of the liquid crystal regions in the second optical region. During specific implementation, in a possible implementation of this application, a plurality of second optical powers that sequentially increase in the second optical region may be controlled to be produced in a direction from the first optical region to the second optical region. In addition, each second optical power in the second optical region may be produced by one or more liquid crystal regions.

The lens provided in this application may be used in glasses. In addition, the glasses may further include a light source. The obtaining a position of a gaze point of a human eye on the first lens layer includes:

transmitting a light beam to the human eye by using the light source;
obtaining a position of a bright spot formed by the light beam on an eyeball surface of the human eye;
obtaining a relative position between a pupil center and the bright spot; and
determining the position of the gaze point on the first lens layer based on the relative position between the pupil center and the bright spot.

In addition, because the gaze point falls in the first optical region of the first lens layer, by determining the position of the gaze point on the first lens layer, a position of the first optical region at the first lens layer may be determined, and a position of the second optical region located at a periphery of the first optical region may be determined. In addition, the position of the gaze point of the human eye on the first lens layer may change when the human eye looks at an object at different gaze angles. Therefore, the positions of the first optical region and the second optical region on the lens may change with the position of the gaze point of the human eye, to meet a personalized requirement for tolerating a blur due to defocus for the user and achieve effective myopia prevention and control effect.

The position of the gaze point on the first lens layer is determined by using the foregoing method based on a relative position relationship between the pupil center and the bright spot. In addition, in another possible implementation of this application, the position of the gaze point on the first lens layer may be further determined based on a human-eye object-viewing distance. During specific implementation, the human-eye object-viewing distance may be first obtained. The human-eye object-viewing distance is a distance between the human eye and a target object at which the human eye gazes. Then, the position of the gaze point on the first lens layer is obtained based on the human-eye object-viewing distance and a preset mapping relationship. It may be understood that the mapping relationship between the human-eye object-viewing distance and the gaze point may be stored in advance. In this way, the position of the gaze point on the first lens layer may be obtained based on the mapping relationship between the human-eye object-viewing distance and the gaze point by measuring the human-eye object-viewing distance, to determine the position of the first optical region on the first lens layer and determine the position of the second optical region located at the periphery of the first optical region.

In addition, the position of the gaze point of the human eye on the first lens layer may change when the human eye looks at an object at different distances. Therefore, the positions of the first optical region and the second optical region on the lens may change with the position of the gaze point of the human eye, to meet a personalized requirement for tolerating a blur due to defocus for the user and achieve effective myopia prevention and control effect.

In a possible implementation of this application, the lens may further include a second lens layer. The second lens layer and the first lens layer may be stacked. The second lens layer may be but is not limited to a liquid crystal lens layer. The second lens layer may include a third substrate, a fourth substrate, a third electrode, and a fourth electrode. The third electrode may be disposed on the third substrate. The fourth electrode may be disposed on the fourth substrate. The fourth electrode includes a third sub-electrode and a fourth sub-electrode. There is a voltage difference between the third sub-electrode and the fourth sub-electrode. In addition, a liquid crystal region is further disposed between the third substrate and the fourth substrate. The liquid crystal region includes liquid crystal molecules. The liquid crystal molecules may deflect with the voltage difference applied between the third sub-electrode and the fourth sub-electrode, thereby producing a corresponding optical power. The lens adjustment method may further include:

obtaining the human-eye object-viewing distance, where the human-eye object-viewing distance is the distance between the human eye and the target object at which the human eye gazes; and
determining an optical power of the second lens layer based on the human-eye object-viewing distance and a relational function of a polynomial of a high degree in a single indeterminate.

In a possible implementation of this application, the relational function of the polynomial of a high degree in a single indeterminate may be obtained through fitting of a plurality of groups of discrete data. The discrete data includes a correspondence between the human-eye object-viewing distance and the optical power.

According to the lens adjustment method provided in this application, the optical power of the second lens layer of the lens may change with the human-eye object-viewing distance according to the relational function of the polynomial of a high degree in a single indeterminate between the human-eye object-viewing distance and the optical power of the second lens layer. In this way, the second lens layer can adapt to a requirement of a change of a human-eye adjustment burden at different human-eye object-viewing distances, thereby improving myopia prevention and control effect of the lens.

Because the optical power of the second lens layer may be produced due to deflection of the liquid crystal molecules in the second liquid crystal region of the second lens layer under effect of the corresponding voltage difference, in a possible implementation of this application, the lens adjustment method may further include:

determining, based on the optical power of the second liquid crystal region, a voltage difference applied between the third sub-electrode and the fourth sub-electrode.

In this way, the liquid crystal molecules in the second liquid crystal region can deflect under effect of the voltage difference between the third sub-electrode and the fourth sub-electrode, to produce the corresponding optical power.

In a possible implementation of this application, the lens adjustment method may further include:

obtaining the first optical power and the second optical power, where the first optical power is a minimum optical power or an optical power with a longest duration of the first liquid crystal region in a process of reducing the optical power of the first liquid crystal region, the second optical power is a maximum optical power or an optical power with a longest duration of the first liquid crystal region in a process of increasing the optical power of the first liquid crystal region, and the process of reducing the optical power of the first liquid crystal region and the process of increasing the optical power of the first liquid crystal region are controlled by using a user instruction; and

obtaining a half of a sum of the first optical power and the second optical power, and using a half of the sum of the first optical power and the second optical power as the optical power of the second liquid crystal region.

In this way, the optical power of the second lens layer of the lens may be adjusted for different presbyopia patients, to meet eye-using requirements of the patients in different short-distance scenarios, thereby improving an eye adjustment capability for eyes of the presbyopia patients.

According to a third aspect, this application further provides a control apparatus. The control apparatus may include a processor and a memory. The memory stores program code. When the program code is executed by the processor, the method according to the second aspect can be implemented. In this way, positions of a first optical region and a second optical region on a lens change with a position of a gaze point of a human eye, to meet a personalized requirement for tolerating a blur due to defocus for a user and achieve effective myopia prevention and control effect.

According to a fourth aspect, this application provides glasses. The glasses include the lens in the first aspect. According to the glasses provided in this application, as a position of a gaze point of a human eye on a lens of the glasses changes, liquid crystal regions included in the first optical region and the second optical region change, so that positions of the first optical region and the second optical region change accordingly, to meet a personalized requirement for tolerating a blur due to defocus for a user and achieve effective myopia prevention and control effect.

In this application, the glasses may include the control apparatus in the third aspect. The control apparatus may be configured to control optical powers of the first optical region and the second optical region, to achieve a purpose of controlling the optical powers of the two optical regions.

To enable a power consuming device such as the control apparatus to work normally, the glasses provided in this application may further include a battery. The battery may supply power for a control process of the control apparatus.

In a possible implementation of this application, the glasses may further include a frame and temples. The lens may be connected to the frame and the temple.

In a possible implementation of this application, the lens may further include a third lens layer. The third lens layer may be a liquid crystal lens layer. The first lens layer and the third lens layer may be stacked. In addition, in a direction from a central region to a peripheral region, the third lens layer may include a plurality of strip-shaped Fresnel lobes. The third lens layer may form a cylindrical liquid crystal lens, and may be configured to correct astigmatism of the human eye.

In addition, in this application, at least one strip-shaped Fresnel lobe may further include a plurality of strip-shaped Fresnel sub-lobes. Optical powers of the plurality of strip-shaped Fresnel sub-lobes may be the same. Because electrode spacing between two adjacent strip-shaped Fresnel sub-lobes obtained after segmentation is reduced, a parabolic electric field distribution curve can be formed at the third lens layer, so that imaging quality of the third lens layer can be obviously improved.

In addition to the foregoing structure, the glasses provided in this application may further include a light source and a gaze angle measurement sensor. The light source and the gaze angle measurement sensor may be disposed on the frame. The light source may be configured to emit a light beam to a human eye. The gaze angle measurement sensor may be configured to obtain a position of a bright spot formed by the light beam on an eyeball surface of the human eye and a relative position between a pupil center and the bright spot.

In this application, to obtain a human-eye object-viewing distance, the glasses may further include a ranging sensor. The ranging sensor may be but is not limited to being disposed on the frame, to obtain the human-eye object-viewing distance through measurement performed by the ranging sensor.

In addition, the glasses may also include the battery. The battery may supply power to a power-consuming device on the glasses, such as the light source, the gaze angle measurement sensor, the ranging sensor, or the control apparatus, to ensure normal operation of these devices.

According to a fifth aspect, this application further provides a computer program. When the computer program is run on a computer, the computer may be enabled to perform the method in the second aspect. In this way, positions of a first optical region and a second optical region on a lens change with a position of a gaze point of a human eye, to meet a personalized requirement for tolerating a blur due to defocus for a user and achieve effective myopia prevention and control effect.

According to a sixth aspect, this application further provides a computer-readable storage medium. The computer-readable storage medium includes a program. When the program is run on a computer, the computer may be enabled to perform the method in the second aspect. In this way, positions of a first optical region and a second optical region on a lens change with a position of a gaze point of a human eye, to meet a personalized requirement for tolerating a blur due to defocus for a user and achieve effective myopia prevention and control effect.

BRIEF DESCRIPTION OF DRAWINGS

FIG. 1a is a schematic diagram of viewing performed by an eye before correction according to an embodiment of this application;

FIG. 1b is a schematic diagram of viewing performed by an eye after correction by using a single vision lens according to an embodiment of this application;

FIG. 1c is a schematic diagram of viewing performed by an eye after good correction according to an embodiment of this application;

FIG. 2a is a schematic diagram of a gaze angle of an eye in a short distance according to an embodiment of this application;

FIG. 2b is a schematic diagram of a gaze angle of an eye in a short distance according to another embodiment of this application;

FIG. 3a is a schematic diagram of an application scenario of lenses according to an embodiment of this application;

FIG. 3b is a side view of the lenses shown in FIG. 3a;

FIG. 4 is a schematic diagram of a structure of a lens according to an embodiment of this application;

FIG. 5 is a schematic diagram of a zooming region of a lens according to an embodiment of this application;

FIG. 6 is a schematic diagram of a vector between a pupil center and a bright spot center according to an embodiment of this application;

FIG. 7 is a flowchart of a lens adjustment method according to an embodiment of this application;

FIG. 8a shows positions in which lines of sight pass through lenses when human eyes look right ahead;

FIG. 8b shows positions in which lines of sight of human eyes pass through lenses during short-distance reading;

FIG. 9 is a schematic diagram of a partial structure of glasses according to a possible embodiment of this application;

FIG. 10 is a schematic diagram of a structure of a lens according to an embodiment of this application;

FIG. 11 is a schematic diagram of a structure of a lens according to another embodiment of this application;

FIG. 12a shows a structure of a solid-state concave lens according to an embodiment of this application;

FIG. 12b is a schematic diagram of a change of optical powers of different regions of a liquid crystal lens according to an embodiment of this application;

FIG. 12c is a schematic diagram of a structure of a second lens layer according to an embodiment of this application;

FIG. 13 is a cross-sectional view of potential distribution of the second lens layer shown in FIG. 12c;

FIG. 14 is a schematic diagram of a structure of a second lens layer according to another embodiment of this application;

FIG. 15 is a schematic diagram of a structure of a lens according to another embodiment of this application; and

FIG. 16 is a schematic diagram of a structure of a second lens layer according to another embodiment of this application.

Reference numerals:

1: retina; 2: frame; 201: mounting hole; 3: lens; 3a: first lens layer;

301a: first substrate; 301b: second substrate; 302: liquid crystal layer; 3021: liquid crystal region; 303a: first electrode; 303b: second electrode; 3031: sub-electrode pair; 3031a: first sub-electrode; 3031b: second sub-electrode; 304: drive apparatus;

305: gaze point; 4: temple; 5: battery; 6: pupil; 7: cornea; 701: bright spot; 8: camera; 9: light source;

10: second lens layer; 1001: first face; 1002: second face; 1003: third substrate; 1004: fourth substrate; 1005: liquid crystal layer; 1006: optical liquid; 1007: baffle; 1008: solid-state lens; 10081: curved face; 11: ranging sensor.

## DESCRIPTION OF EMBODIMENTS

To make the objectives, technical solutions, and advantages of this application clearer, the following further describes this application in detail with reference to the accompanying drawings.

Myopia is a common vision problem. Myopia indicates a symptom that an eye cannot clearly see distant objects but can clearly see near objects. This is because, under a condition without accommodation, a distant object cannot be converged at a retina, and instead a focus is formed before the retina, causing visual distortion and a blur of the distant object. Myopia is classified into: refractive myopia and axial myopia. Myopia mainly occurs when an anteroposterior axis of an eyeball is excessively long (referred to as axial myopia), and secondly occurs when a refraction capability of an eye is strong (referred to as curvature myopia).

Currently, a most commonly used manner for myopia is wearing myopia glasses. Lenses of the myopia glasses are negative lenses. A central region of the negative lens is thin, and an edge region of the negative lens is relatively thick. The negative lens has a capability of diverging light. After wearing of the myopia glasses, a distant object can be converged on the retina, thereby resolving a distant vision problem. However, when reading and writing are performed in a short distance, the lenses of the myopia glasses make an object image focus more backward, which increases an eye-using burden in the short distance, thereby aggravating myopia and further impairing vision. After the vision is impaired, to meet an imaging requirement of the distant object on the retina, it is required to replace the myopia glasses with myopia lenses with a higher diopter. This causes a vicious cycle of impairing the vision and continuously changing glasses, especially for young students with strong regulation capabilities. It can be learned from the foregoing analysis that, after myopia occurs, through wearing the myopia glasses, the vision can be corrected only, but further aggravation of myopia cannot be further controlled.

Currently, there are many myopia correction methods, while each method has its own insurmountable defects. For example, laser surgery cannot control the aggravation of myopia, and is also not suitable for children and teenagers with faster myopia aggravation processes. Corneal contact lenses may lead to a corneal infection risk. In addition, because the corneal contact lenses need to be replaced frequently, long-term wearing is expensive. Further, a drug treatment method has relatively large side effect.

A peripheral defocus theory indicates a cause of myopia put forward by a professor in a university of ophthalmology in the United States at the end of the last century. To understand the peripheral defocus theory, several related terms are explained first. A focal length is a measurement manner for measuring light convergence or divergence in an optical system, and indicates a distance from an optical center of a lens to a focal point of light convergence when parallel light is incident. An optical power is also referred to as a dioptric degree, and is the reciprocal of the focal length. The optical power is a unit used to measure a refraction capability of a lens or a curved mirror. The unit of the optical power is D. When the focal length is 1 m, the optical power is 1 D, that is, 1 $m^{-1}$. When the focal length is 2 m, the optical power is 0.5 D, and so on. Generally, a degree value used for the glasses is a product of a value of a diopter D and 100. For example, - 1.0 D is equal to 100 degrees of a myopia lens (a concave lens), and +1.0 D is equal to 100 degrees of a presbyopia lens (a convex lens). Peripheral defocus indicates a phenomenon that an object image in a central part of the lens is projected on the retina, and an object image in a peripheral part of the lens is projected in front of or behind the retina. Projection in front of the retina is referred to myopic defocus. Projection behind the retina is referred to as presbyopic defocus. Peripheral presbyopic defocus stimulates axis ocuil elongation. Axis ocuil elongation causes myopia deterioration. Generally, a myopia degree increases by about 300 degrees each time an eye axis increases by 1 mm.

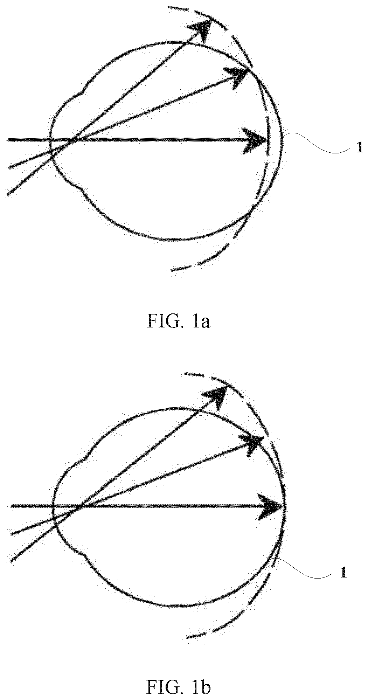

FIG. 1a is a schematic diagram of viewing performed by an eye before correction according to an embodiment of this application. A dashed line in FIG. 1a represents an imaging position of an object image. It can be learned from FIG. 1a that before correction, object images of a central vision region and some peripheral regions are all projected in front of a retina 1. To correct myopia, a main purpose of a conventional single vision lens is to meet a requirement of a wearer for unclear vision in a case of a long distance. In this case, only defocus of a central macular region of the eye can be corrected. FIG. 1b is a schematic diagram of viewing performed by an eye after correction by using a single vision lens according to an embodiment of this application. After correction, the object image in the central vision region can be projected to the retina 1, but the object image in the peripheral region is projected behind the retina 1, thereby causing hyperopic defocus. Hyperopic defocus stimulates axis ocuil elongation and continuously increases the myopia degree.

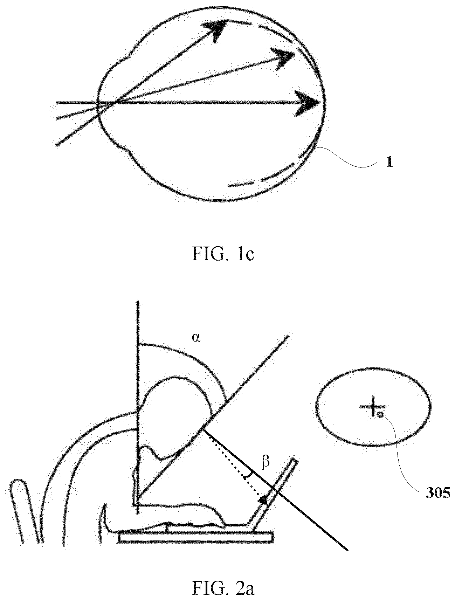

FIG. 1c is a schematic diagram of viewing performed by an eye after good correction. To achieve correction effect shown in FIG. 1c, currently, some glasses manufacturers also launch defocus myopia prevention and control glasses. During a design of defocus myopia prevention and control glasses, a concentric bifocal design is used. The defocus myopia prevention and control glasses include two correction optical regions and two treatment optical regions.

There are four concentric optical regions in total. The four concentric optical regions are respectively denoted as a first optical region, a second optical region, a third optical region, and a fourth optical region in a direction from a central region to a peripheral region. The first optical region and the third optical region have the same degree. A function is to correct a myopia degree. A +2 D optical power is added based on a corrected myopia degree for the second optical region and the fourth optical region, to cause myopic defocus on the retina 1, thereby achieving effect of slowing down myopia aggravation. Another type of defocus myopia prevention and control glasses uses a geometric non-centrosymmetrical design that is wide horizontally and narrow vertically and that uses a rhombus-like shape with a lower side intilted to a nose side. Positive optical powers are progressively added peripherally. The added maximum optical power is about +2 D. Another type of defocus myopia prevention and control glasses uses a rotational symmetric design. A range whose radius is about 4.7 mm and that is centered in a geometric center of the glasses is a region for stable diopter correction. A peripheral range with a radius from 4.7 mm to 16.5 mm uses an annular honeycomb design. In addition, 396 +3.5 D convex micro-lenses are added to form a defocus region.

A lens of conventional peripheral defocus myopia glasses is usually divided into a central optical region and a peripheral defocus region. During prescription, the lens is designed based on a reference that an eyeball looks right ahead and lines of sight pass through the central optical region of the lens. In this case, the central optical region uses a myopia degree obtained through dioptoscopy for a user, and is used to correct the myopia degree, to ensure clear distant vision of the user. A specific added optical power is set (a positive optical power is added) in the peripheral defocus region, so that light in the peripheral defocus region is converged in advance to cause myopic defocus, thereby preventing and controlling myopia aggravation.

However, the central optical region and the peripheral defocus region of the defocus myopia prevention and control glasses are fixed, and cannot change with rolling of the eyeball. Therefore, the defocus myopia prevention and control glasses are not applicable to eye-using scenarios at different gaze angles. However, in a real life scenario, during gazes in various directions, the eyeballs roll continuously. In this case, lines of sight during the gazes of the eyeballs do not always pass through optical centers of the lenses. For example, during short-distance reading, binocular single vision occurs, and eyes are in convergence motion and backspin motion. A value of an eyeball rolling angle is related to a sight distance and a pupillary distance. A smaller sight distance and a larger pupillary distance indicate a larger rolling angle. A larger sight distance and a smaller pupillary distance indicate a smaller rolling angle.

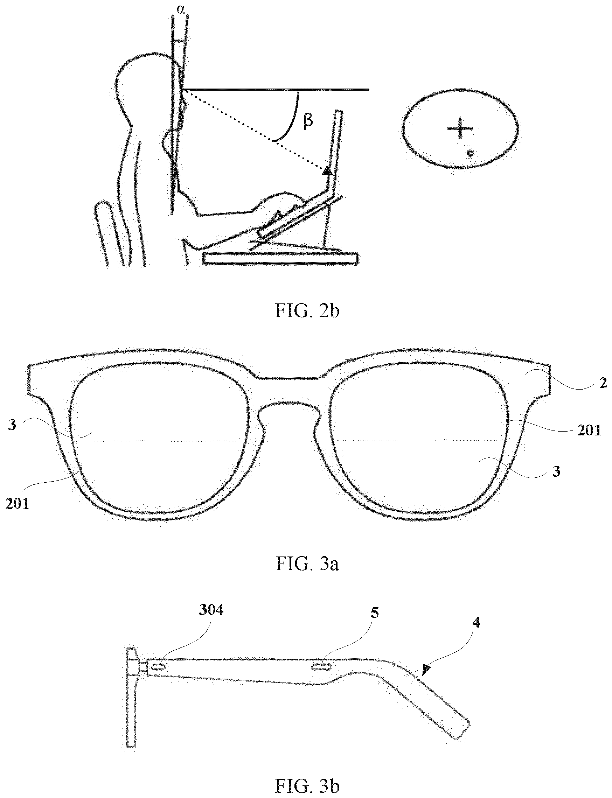

In addition, different individuals have different reading habits due to age, phoria, head positions during reading, reading distances, and the like. In addition, different individuals are different in head turning or eye rolling functions. For example, refer to FIG. 2a. FIG. 2a is a schematic diagram of a gaze angle of an eye in a short distance according to an embodiment of this application. As shown in FIG. 2a, when a person who is accustomed to turning the head looks at a peripheral target, the person turns the head to make a gaze point 305 fall on the target (that is, a head tilt angle $\alpha$ has a relatively large value, for example, greater than 30°, and an eyeball rolling amplitude $\beta$ has a relatively small value, for example, within 10°). In addition, refer to FIG. 2b. FIG. 2b is a schematic diagram of a gaze angle of an eye in a short distance according to another embodiment of this application. As shown in FIG. 2b, a person who is accustomed to moving eyes makes a gaze point 305 fall on a target through eyeball rolling (that is, a head tilt angle $\alpha$ has a relatively small value, for example, within 10°, and an eyeball rolling amplitude $\beta$ has a relatively large value, for example, greater than 20°). For both types, a total movement amplitude of the head and the eyeball is equivalent to a position of a peripheral gaze target. Researchers in the art compare gaze angles of children wearing single vision lenses and progressive lenses in cases of ermnetropia, exophoria, and esophoria; and find that a gaze angle of a child with exophoria is small while a gaze angle of a child with esophoria is large. This trend increases significantly in a case of wearing progressive addition lenses. A large gaze angle means that a position of a line of sight passing through the lens when viewing is performed in a short distance deviates from the central optical center.

In addition, tolerance of a blur due to defocus of different individuals is different. A peripheral defocus design in a fixed position brings uncomfortableness to some users after glasses prescription. However, the lens cannot be adjusted after being polished. In addition, myopia degrees of teenagers are irreversible. Although myopia aggravation can be slowed down through peripheral defocus, myopia aggravation cannot be contained. With axis ocuil elongation and myopia aggravation, defocus glasses that were worn before are no longer applicable in both a central optical region and a defocus region, resulting in frequent glasses prescription.

The lens provided in this application is intended to resolve the foregoing problem. A position of a defocus region of the lens can be flexibly adjusted. Therefore, a position of the defocus region may change with a position of a gaze point of a user, to meet a personalized requirement for tolerating a blur due to defocus for the user and achieve effective myopia prevention and control effect. In this application, the central region of the lens may be understood as a gaze region in which a gaze point falls on the lens when the user looks at a long distance, and the peripheral region may be understood as a region located on a periphery of the central region.

It should be noted that the glasses that are provided in this application and that are provided with the foregoing lens may be used in a plurality of scenarios, for example, an indoor scenario such as a book reading scenario or a working scenario, or an outdoor scenario such as a tour, a walk, or a ride. In addition, the glasses provided with the lens provided in this application can not only implement functions of myopia glasses, but also integrate some functional modules used to implement man-machine interaction, to form, for example, virtual reality (virtual reality, VR) smart glasses or augmented reality (augmented reality, AR) smart glasses, thereby meeting use requirements of some myopia patients in some man-machine interaction scenarios.

Terms used in the following embodiments are merely intended to describe particular embodiments, but are not intended to limit this application. As used in the specification and appended claims of this application, singular expressions "one", "a", "the foregoing", "the", and "the one" are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in other embodiments", and "in some other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

FIG. 3a is a schematic diagram of an application scenario of a lens 3 according to an embodiment of this application. In the embodiment shown in FIG. 3a, a structure of glasses is shown. The glasses may include a frame 2 and lenses 3. The lenses 3 are fastened to the frame 2. For ease of wearing the glasses, refer to FIG. 3b. FIG. 3b is a side view of the glasses shown in FIG. 3a. The glasses are usually further provided with temples 4. The lenses 3 may be further fixedly connected to the temples 4.

In addition, in the embodiment shown in FIG. 3a, the frame 2 may have two mounting holes 201, and the two mounting holes 201 may be symmetrically disposed. In this embodiment, the temples 4 may be fastened to the frame 2, so that the lenses 3 are indirectly connected to the temples 4. In addition, there are two lenses 3, and the two lenses 3 are mounted in the two mounting holes 201 of the frame 2 in a one-to-one correspondence. A shape of the lens 3 may be, but is not limited to, a regular shape such as a circle or a square, or may be a possible irregular shape, to increase shape diversity of the lens 3, thereby increasing user selectivity and improving use experience of the user. In some other embodiments of this application, the frame 2 may be alternatively a connecting piece disposed between the two lenses 3, and the temples 4 may be directly and fixedly connected to the lenses 3.

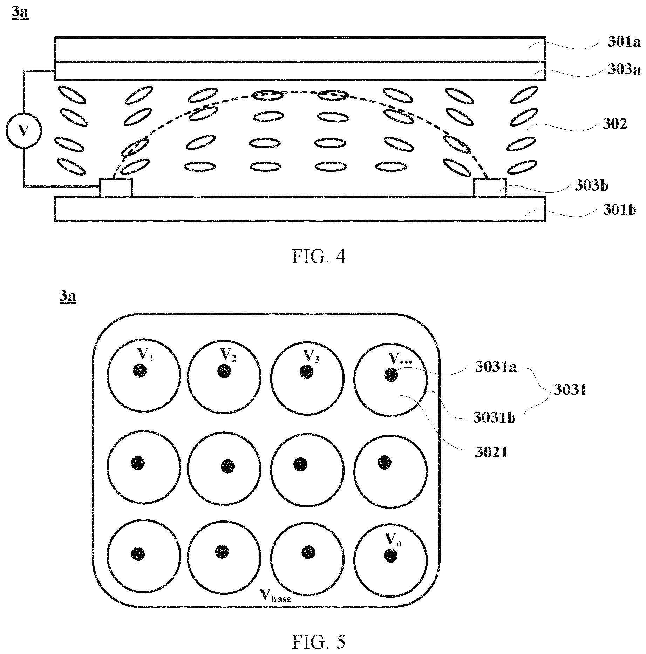

In this application, the lens 3 includes at least one lens layer, for example, includes a first lens layer 3a. FIG. 4 is a schematic diagram of a structure of a first lens layer 3a according to a possible embodiment of this application. In the embodiment shown in FIG. 4, the first lens layer 3a is a liquid crystal lens, and the first lens layer 3a may include a first substrate 301a, a second substrate 301b, a liquid crystal layer 302, a first electrode 303a, and a second electrode 303b. The first electrode 303a is disposed on the first substrate 301a, the second electrode 303b is disposed on the second substrate 301b, and the liquid crystal layer 302 is located between the first substrate 301a and the second substrate 301b.

It may be understood that the lens 3 has a relatively high requirement on light transmission. In this application, a transparent material may be selected as a material of the first lens layer 3a. For example, the first substrate 301a and the second substrate 301b may be made of, but are not limited to, transparent materials such as polyethylene terephthalate (PET), polyethylene naphthalate (PEN), polyimide (PI), and polydimethylsiloxane (PDMS). In addition, the first electrode 303a and the second electrode 303b may be transparent conductive electrodes, and materials of the first electrode 303a and the second electrode 303b may be, for example, transparent conductive oxide TCO, such as indium tin oxide (indium tin oxide, ITO); or conductive polymer, metal nanowire, metal grid, graphene, carbon nanotube, metal, alloy, metal oxide, or the like.

Still with reference to FIG. 4, in this application, a voltage applied to the first electrode 303a and the second electrode 303b may generate a corresponding electric field between the first substrate 301a and the second substrate 301b. For example, in the embodiment shown in FIG. 4, when different voltages are applied to different regions of the first lens layer 3a, gradient distribution of voltage differences and electric fields may be formed in different regions. The electric field may be applied on the liquid crystal layer 302. Liquid crystal molecules located in different regions of the liquid crystal layer 302 may adaptively deflect under effect of the corresponding electric field. For example, an electric field in a central region of the lens may be relatively small, and an electric field in a peripheral region is relatively large. A deflection angle of a liquid crystal molecule in a place with a relatively large electric field is greater, to form curve distribution (as shown by using a dashed line in FIG. 4) in which deflection angles of liquid crystal molecules in the peripheral region are large and deflection angle of liquid crystal molecules in the central region are small.

A voltage difference (voltage amplitude) mainly affects a change trend of voltage distribution. A voltage frequency mainly affects flatness of voltage distribution. An actual voltage difference and voltage distribution of the liquid crystal lens are determined based on combination and interaction of the voltage difference and the voltage frequency. Different electric field distribution of the liquid crystal layer 302 is formed based on an applied voltage difference and an applied voltage frequency. Accordingly, different curve deflection distribution is formed for the liquid crystal molecules. Different areas forming the first lens layer 3a have different curvature distribution, to produce different optical powers. A maximum optical power $\varphi_{max}$ that can be produced through arrangement of the liquid crystal molecules is limited by a material characteristic (birefringence index $\Delta n$) of the liquid crystal molecules, a thickness d of the liquid crystal layer 302, and a radius r of a lens aperture.

In this case, $\varphi_{max} = \pm \frac{2d\Delta n}{r^2}$ .

In a specific application scenario, if the material characteristic of the liquid crystal molecules, the thickness of the liquid crystal layer 302, and the lens aperture are known, an optical power may be adjusted within the foregoing limited range by controlling a voltage amplitude and a frequency.

On this basis, in this application, the liquid crystal layer 302 may include a plurality of liquid crystal regions 3021, to form a liquid crystal sub-lens array in the first lens layer 3a. In this application, a contour shape of the liquid crystal region 3021 is not limited. For example, the contour shape may be a regular shape such as a circle or a rectangle, or may be a possible irregular shape. In this way, a voltage amplitude and a voltage frequency may be separately set for each liquid crystal region 3021, to independently control an optical power of each liquid crystal region 3021. During specific implementation, refer to FIG. 5. FIG. 5 is a schematic diagram of a zooming region of a first lens layer 3a according to an embodiment of this application. In this application, the second electrode 303b may include a plurality of sub-electrode pairs 3031, and the plurality of sub-electrode pairs 3031 are disposed in a one-to-one correspondence with the plurality of liquid crystal regions 3021. In addition, each sub-electrode pair 3031 includes a first sub-electrode 3031a and a second sub-electrode 3031b. The second sub-electrode 3031b is disposed as an annular electrode. A voltage difference may be formed between the first sub-electrode 3031a and the second sub-electrode 3031b, to form a voltage difference region between the first sub-electrode 3031a and the second sub-electrode 3031b. The second sub-electrode 3031b may be correspondingly disposed at an edge of the liquid crystal region 3021. In this way, a projection of each liquid crystal region 3021 on the second substrate 301b falls within a region enclosed by one second sub-electrode 3031b. Therefore, a voltage difference and a voltage frequency applied to the sub-electrode pair 3031 may be applied to the corresponding liquid crystal region 3021.

In addition, with reference to FIG. 5, the second sub-electrodes 3031b in all the sub-electrode pairs 3031 are connected to each other to serve as a common power supply electrode $V_{base}$, and the first sub-electrodes 3031a in all the sub-electrode pairs 3031 are independent electrodes $V_1$, $V_2$, $V_3$, ..., and $V_n$. In this way, a voltage applied to the first sub-electrode 3031a in each sub-electrode pair 3031 may be adjusted to independently adjust a voltage difference applied to each sub-electrode pair 3031, so that liquid crystal molecules in a corresponding liquid crystal region 3021 adaptively deflect, to produce a corresponding optical power in the liquid crystal region 3021. It may be understood that, in some possible embodiments of this application, the first sub-electrodes 3031a in all the sub-electrode pairs 3031 may be alternatively connected to serve as a common power supply electrode, and the second sub-electrodes 3031b in all the sub-electrode pairs 3031 are independent electrodes. In this way, the voltage difference of each sub-electrode pair 3031 can also be independently adjusted. Alternatively, in some embodiments, the first sub-electrode 3031a and the second sub-electrode 3031b in each sub-electrode pair 3031 may be separately controlled, to improve control flexibility of each sub-electrode pair 3031.

It should be noted that, because the liquid crystal molecules can deflect in response to effect of the electric field only when a specific voltage threshold is reached, in this application, a base voltage may be applied to the first electrode 303a on the first substrate 301a shown in FIG. 4, to improve an overall electric field voltage between the first substrate 301a and the second substrate 301b, so that the liquid crystal molecules work at a critical voltage. A positive liquid crystal material is used as an example. A voltage applied to the common power supply electrode $V_{base}$ may be 1 V, and a voltage applied to the first electrode 303a on the first substrate 301a is 0 V. In this case, the liquid crystal molecules are just under effect of the critical voltage. When a voltage higher than 1 V is applied to the first sub-electrode 3031a in each sub-electrode pair 3031 shown in FIG. 5, deflection of the liquid crystal molecules starts, to produce a corresponding optical power. In addition, because the liquid crystal molecules have different deflection directions and deflection angles under effect of different voltage differences applied to the corresponding sub-electrode pairs 3031, optical powers produced in different liquid crystal regions 3021 may be adjusted by adjusting voltages applied to the first sub-electrodes 3031a in the different sub-electrode pairs 3031.

It may be understood that, to separately apply corresponding voltages to the first sub-electrodes 3031a in the different sub-electrode pairs 3031 of the first lens layer 3a, in some embodiments of this application, a driving apparatus 304 may be disposed for the first lens layer 3a. When the lens provided in this application is used for the glasses, the driving apparatus 304 may be, but is not limited to being, disposed in the temple 4 of the glasses shown in FIG. 3b, to properly use internal space of each part of the structure of the glasses. In some other possible implementations, the driving apparatus 304 may be further disposed in the frame 2 of the glasses. In this embodiment of this application, the driving apparatus 304 may be a voltage conversion unit, for example, a resistor-based voltage generator or pulse width modulation, to meet voltage requirements of different first sub-electrodes 3031a.

When the lens 3 provided in this application is used in the glasses, a control apparatus may be disposed in the glasses. The control apparatus may be disposed in the frame 2 shown in FIG. 3a, or may be disposed in the temple 4 shown in FIG. 3b. The control apparatus may be configured to control a working process of the driving apparatus 304, to adjust a voltage applied to each liquid crystal region 3021, so that each liquid crystal region 3021 produces a corresponding optical power. In some embodiments of this application, the control apparatus may include a processor and a memory. The processor may be configured to: obtain a myopia degree and a defocus degree that are set by the user, and control start of the driving apparatus 304 based on the obtained myopia degree and defocus degree, to apply corresponding voltages to the first sub-electrodes 3031a in the different sub-electrode pairs 3031 of the first lens layer 3a. In addition, the memory may be configured to store the myopia degree and the defocus degree that are obtained by the processor. In this application, the memory may be a computer-readable memory in any possible form, and may be but is not limited to an electrically erasable programmable read-only memory (electrically erasable programmable read-only memory, EEPROM), a hard disk drive, or the like.

Still with reference to FIG. 3a and FIG. 3b, the glasses may be further provided with a battery 5. The battery 5 may be disposed in the frame 2 shown in FIG. 3a, or may be disposed in the temple 4 shown in FIG. 3b. The battery 5 may be used as a power supply for a possible power-consuming device in the glasses, for example, the driving apparatus 304 and the control apparatus. In addition, in this application, the battery 5 may be detachably connected to the frame 2 or the temple 4 of the glasses, so that the battery 5 can be replaced in time, to avoid a case of affecting normal use of the glasses.

In this application, the optical powers produced in the different liquid crystal regions 3021 can be adjusted. Therefore, the different liquid crystal regions 3021 may be numbered, and a correspondence between each of the optical powers of the liquid crystal regions 3021 with different numbers, and each of a voltage difference and a voltage frequency that are applied to each sub-electrode pair 3031 may be formed in a form of a lookup table or a curve. For example, refer to Table 1. Table 1 is a lookup table of a correspondence between the optical power of the liquid crystal region 3021 and each of the voltage difference and the voltage frequency that are applied to the corresponding sub-electrode pair 3031 according to a possible embodiment of this application. The lookup table may be prestored in the foregoing memory.

**Table 1**

| Optical power of the lens | Voltage difference between the first sub-electrode 3031a and the second sub-electrode 3031b | Voltage frequency |
|---|---|---|
| *** | *** | *** |
| *** | *** | *** |
| *** | *** | *** |
| Optical power of the lens | Voltage difference between the first sub-electrode 3031 a and the second sub-electrode 3031b | Voltage frequency |
| *** | *** | *** |

In addition, in this application, a gaze angle measurement sensor may be further disposed for the first lens layer 3a, and the gaze angle measurement sensor may be disposed on the frame 2 of the glasses. In addition, the gaze angle measurement sensor may be but is not limited to being manufactured according to principles of an eye tracking technology, for example, electrooculography, an electromagnetic induction method, an image/a video analysis method, and a pupil-corneal reflection method. In this way, a position of a gaze point on the first lens layer 3a may be obtained by recording positioning and movement of an eye.

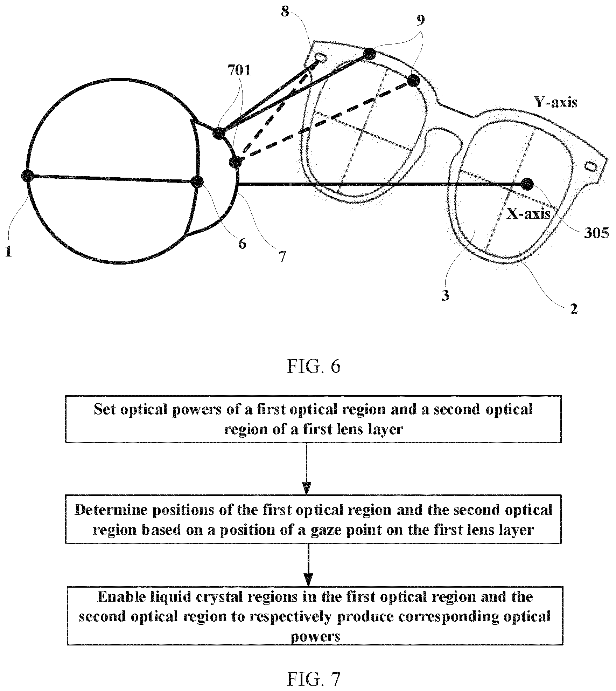

The pupil-corneal reflection method is used as an example. FIG. 6 is a schematic diagram of a vector between a pupil center and a bright spot center. A light source 9 (for example, an infrared light source) disposed on the frame 2 of the glasses is used to transmit a light beam to an eyeball. The light beam generates a bright spot 701 on a surface of a cornea 7. Then a camera 8 is used to obtain an eye image, to obtain coordinates of a center of a pupil 6 and coordinates of a center of the bright spot 701, that is, a vector between the center of the pupil 6 and the center of the bright spot 701. The vector changes with a direction of a line of sight of the pupil 6. As shown in FIG. 6, a plurality of light sources 9 may form more centers of bright spots 701 in different positions, to form a human-eye plane coordinate system. In this way, a relative position of the center of the pupil 6 can be better positioned. On this basis, the position of the gaze point 305 of the line of sight in the plane coordinate system of the first lens layer 3a can be deduced based on environment calibration coordinate data.

In an actual application system, the environment calibration coordinate data is known, and includes a distance between the first lens layer 3a and the human eye, a tilt angle of the first lens layer 3a relative to a surface of the human eye, and a position of a center of each bright spot 701, so that a mapping relationship can be established between the coordinates of the center of the pupil 6 and the coordinates of the gaze point 305 on the lens. In this application, a position of the first optical region can be identified based on only the gaze point 305 of the line of sight in the adjustable peripheral defocus region. The first optical region is a region of a position of the gaze point 305 of the human eye on the first lens layer 3a, and may also be referred to as an optical central region. However, a diameter of the first optical region is usually greater than 9 millimeters. Due to a wide diameter range, a precision requirement of the gaze point 305 of the line of sight is reduced. Therefore, preset correction may be performed on a discrete value of the center of the pupil 6, to form a form of a data lookup table. Table 2 is a data lookup table of a mapping relationship between the center of the pupil 6 and the gaze point 305 according to an embodiment of this application. The data lookup table may be stored in the memory. In this way, after the camera 8 obtains coordinate data of the center of the pupil 6, the processor may invoke the data lookup table to obtain coordinates of a closest gaze point 305 on the first lens layer 3a, that is, complete measurement of the gaze point.

Table 2

| Coordinate x of the center of the pupil 6 | Coordinate y of the center of the pupil 6 | Coordinate x of the gaze point 305 on the lens | Coordinate y of the gaze point 305 on the lens |
|---|---|---|---|
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |

In actual application, a position and a shape of each liquid crystal region 3021 in the first lens layer 3a are known. A coordinate range of a point included in each liquid crystal region 3021 is also determined. These parameters are preset when the first lens layer 3a is formed. Table 3 is an information lookup table of a position and a shape of each liquid crystal region 3021 of the first lens layer 3a according to an embodiment of this application. The lookup table may be stored in the memory.

Table 3

| Number of the liquid crystal region 3021 | Coordinate x of a center of the liquid crystal region 3021 | Coordinate y of the center of the liquid crystal region 3021 | Radius r of the liquid crystal region 3021 |
|---|---|---|---|
| *** | *** | *** | *** |
| *** | *** | *** | *** |
| *** | *** | *** | *** |
| *** | *** | *** | *** |

(continued)

| Number of the liquid crystal region 3021 | Coordinate x of a center of the liquid crystal region 3021 | Coordinate y of the center of the liquid crystal region 3021 | Radius r of the liquid crystal region 3021 |
|---|---|---|---|
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |
| *** | *** | *** | *** |

For ease of description, the shape of the liquid crystal region 3021 is a circle. It is known that coordinates of the center of the liquid crystal region is (a, b), and a distance between each point on the circle and a center of the circle is equal to a radius r of the circle.

In this case, $\sqrt{(x-a)^2 + (y-b)^2} = r$.

The distance between each point in the circle and the center of the circle is less than the radius of the circle.

In this case, $\sqrt{(x-a)^2 + (y-b)^2} < r$.

On this basis, comparison is sequentially performed on a distance between coordinates of each gaze point 305 on the first lens layer 3a that are measured by the gaze angle measurement sensor and a center of a circle of each liquid crystal region 3021. If the distance is less than or equal to the radius of the circle, a number of the liquid crystal region 3021 in the position of the coordinates of the gaze point 305 may be identified. Liquid crystal regions 3021 that meet the foregoing conditions are determined as being in the first optical region, and other liquid crystal regions 3021 are determined to be located in the second optical region. The second optical region is located at a periphery of the first optical region, and may also be referred to as a peripheral region.

In addition, the processor may adjust the optical power of the liquid crystal region 3021 included in the first optical region to the myopia degree of the user, to ensure a capability of the user for clear vision in a case of a long distance; and add a positive optical power based on the myopia degree of the user for the liquid crystal region 3021 included in the second optical region, to implement myopia prevention and control effect based on myopic defocus.

After a zoom principle of the lens in this application is described, with reference to FIG. 7, the following describes an adjustment method of a position of a defocus region of the lens 3 when the lens 3 is used in the glasses. FIG. 7 is a flowchart of an adjustment method of a lens 3 according to a possible embodiment of this application.

Step 1: Set optical powers of the first optical region and the second optical region of the first lens layer 3a of the lens 3. The optical power of the first optical region corresponds to the myopia degree of the human eye, and the optical power of the second optical region corresponds to the defocus degree. In this application, different setting manners of the myopia degree and the defocus degree may be set based on different application scenarios. For example, in a possible embodiment of this application, the myopia degree and the defocus degree of the first lens layer 3a of the lens 3 may be actively set by the user. During specific implementation, a wireless (for example, Bluetooth) connection path may be established between application software on an external terminal device such as a mobile phone and the lens of the glasses. In this way, the user may set the myopia degree and the defocus degree by using the application software. When the processor of the lens receives a command that is for setting the myopia degree (a dioptric degree) and the defocus degree and that is transmitted from the external terminal device, the processor may convert the dioptric degree and the defocus degree into corresponding optical powers. A relationship between an optical power and a dioptric degree or a defocus degree in common optometry is that Optical power = (Dioptric degree or Defocus degree)/100.

In another possible embodiment of this application, a smart sensing module may be disposed on the glasses, to obtain displacement between each point of imaging at the retina 1 and ideal imaging by using the smart sensing module. Further, the displacement is converted into the myopia degree and the defocus degree, thereby implementing self-setting of the glasses. In addition, the smart sensing module may use any possible light tracking sensor, and includes but is not limited to a Shack-Hartmann wavefront sensor, a Tscherning sensor, and the like.

Step 2: Determine the position of the gaze point on the first lens layer by using the gaze angle measurement sensor. Because the gaze point is located in the first optical region, positions of the first optical region and the second optical region may be determined based on the position of the gaze point on the first lens layer. The second optical region is located at a periphery of the first optical region. In addition, after the positions of the first optical region and the second optical region are determined, a number of the liquid crystal region 3021 included in the first optical region and a number of the liquid crystal region 3021 included in the second optical region may be determined. The optical power of the liquid crystal region 3021 located in the first optical region may correspond to the myopia degree. In addition, the optical power of the liquid crystal region 3021 located in the second optical region is the defocus degree superposed on the corresponding myopia degree. The second optical region is used as a defocus region.

It may be understood that, in this application, the position of the first optical region may change with the position of the gaze point, and a position of the defocus region may also change adaptively with the position of the gaze point. Therefore, a visual axis of the human eye passes through the first optical region as much as possible, to better ensure sufficiently clear distant vision and peripheral defocus effect. In addition, because the human eye has pupillary distance adaptability, and different individuals have different pupillary distances, when the lens 3 provided in this application is used, the central region of the entire lens 3 can be moved and adjusted by dynamically adjusting the position of the defocus region of the first lens layer 3a of the lens 3, to meet personalized requirements of different positions of the optical central regions of the lenses 3 due to diversified pupillary distances of users.

In addition, in this application, because there may be a gap between liquid crystal regions of the first lens layer 3a, an optical power at the gap is 0. On this basis, an optical power of each liquid crystal region located in the first optical region may be set to 0. In this way, the first optical region may have a consistent optical power, so that the first optical region can provide clear visual effect. For the second optical region, the defocus degree of the second optical region may change with a setting of the user. In this application, the optical powers in the second optical region of the first lens layer 3a of the lens 3 may further progressively change in a direction from the central region to the peripheral region. During specific implementation, the coordinates (a, b) of the gaze point 305 on the lens are used as a center, and a liquid crystal region 3021 farthest from the gaze point 305 has a maximum defocus degree. Therefore, a distance between each liquid crystal region 3021 on the lens and the gaze point 305 can be calculated. Still in an example in which a radius of the first optical region is set to 9 millimeters, the optical power of the liquid crystal region 3021 farthest from the first optical region is the defocus degree, and a distance between the gaze point 305 and coordinates (x, y) of a center of the liquid crystal region 3021 located in the first optical region satisfies:

$$\sqrt{(x-a)^2 + (y-b)^2} \leq 9.$$

The liquid crystal region 3021 that meets this condition is determined to be in the first optical region. The optical power of the liquid crystal region 3021 corresponds to the myopia degree.

In this way, a distance $R_{max}$ between the gaze point 305 and the farthest liquid crystal region 3021 is obtained through traversal, and the optical power of the farthest liquid crystal region 3021 is a defocus degree D. Therefore, the optical power $\varphi$ of each liquid crystal region 3021 in the optical peripheral region and the distance to the gaze point 305 may be in a linear progressive increase relationship.

$$\varphi = \frac{\sqrt{(x-a)^2 + (y-b)^2} - 9}{R_{max} - 9} \times D$$

In this case, .

Defocus degrees in the first lens layer 3a of the lens 3 progressively increase in the direction from the central region to the peripheral region. In this way, image jump interference caused due to a relatively large dioptric degree difference of an adjacent part of the second optical region of the first lens layer 3a of the lens 3 can be reduced, thereby improving use comfortableness of the user.

It may be understood that, in this application, the defocus degrees in the first lens layer 3a progressively increase in the direction from the central region to the peripheral region. In other words, the optical powers in the second optical region of the first lens layer 3a progressively increase in the direction from the central region to the peripheral region. Setting the optical powers in the second optical region to progressively increase may be implemented by adjusting an optical power produced by each first liquid crystal region in the second optical region. During specific implementation, each first liquid crystal region located in the second optical region may produce one optical power, and the optical powers produced by the first liquid crystal regions may be the same or different. In this way, the optical powers of the first liquid crystal regions located in the second optical region may be set to progressively increase in the direction from the first optical region to the second optical region, so that the optical powers in the second optical region can be set to progressively increase.

Step 3: The processor retrieves a corresponding control voltage amplitude and a corresponding voltage frequency from the memory based on the optical power of each liquid crystal region 3021 located in the first optical region and the second optical region, and transmits the control voltage amplitude and the voltage frequency to a voltage conversion unit corresponding to each liquid crystal region 3021, so that the voltage conversion unit outputs a voltage signal on a corresponding frequency. In this way, the liquid crystal regions 3021 located in the first optical region and the second optical region produce preset optical powers.

According to the lens adjustment method provided in this embodiment of this application, the position of the gaze point 305 on the first lens layer 3a is obtained through measurement by using the gaze angle measurement sensor. In addition, the gaze point 305 is located in the first optical region, and the second optical region is located at the periphery of the first optical region. Therefore, in this way, the positions of the first optical region and the second optical region, and numbers of the liquid crystal lens regions included in the first optical region and the second optical region may be determined. The optical power of the liquid crystal region 3021 located in the first optical region may correspond to the myopia degree. In addition, the optical power of the liquid crystal region 3021 located in the second optical region is the defocus degree superposed on the corresponding myopia degree. The second optical region is used as a defocus region.

It may be understood that, in this application, the position of the first optical region may change with the position of the gaze point 305, and a position of the defocus region may also change adaptively with the position of the gaze point 305. Therefore, a visual axis of the human eye passes through the first optical region as much as possible, to better ensure sufficiently clear distant vision and peripheral defocus effect. In addition, because the human eye has pupillary distance adaptability, and different individuals have different pupillary distances, when the lens 3 provided in this application is used, the central region of the entire lens 3 can be moved and adjusted by dynamically adjusting the position of the defocus region of the first lens layer 3a of the lens 3, to meet personalized requirements of different positions of the optical central regions of the lenses 3 due to diversified pupillary distances of the users.

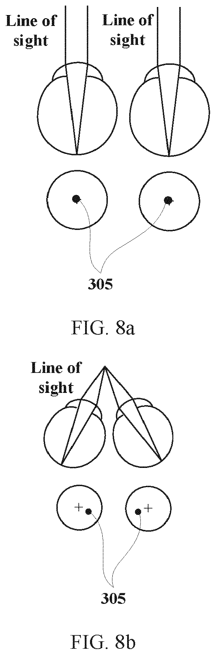

During prescription, conventional myopia prevention and control glasses are designed based on a reference that the human eye looks right ahead and lines of sight pass through the optical center of the lens. As shown in FIG. 8a, FIG. 8a shows positions in which lines of sight pass through lenses when human eyes look right ahead. However, in a real life scenario, when the human eyes gaze in various directions, eyeballs roll continuously. In this case, lines of sight during the gazes of the human eyes do not always pass through the optical centers of the lenses 3. During short-distance reading, this case may be shown in FIG. 8b. FIG. 8b shows positions in which lines of sight of human eyes pass through lenses during short-distance reading. In this case, binocular single vision occurs, and eyes are in convergence motion and backspin motion. Lines of sight during the gazes of the human eyes deflect to one side of the lenses. Therefore, when the human eyes look at objects at different distances, the lines of sight during the gazes of the human eyes pass through different positions of the lenses. In other words, positions of the gaze points 305 on the lenses 3 are different.

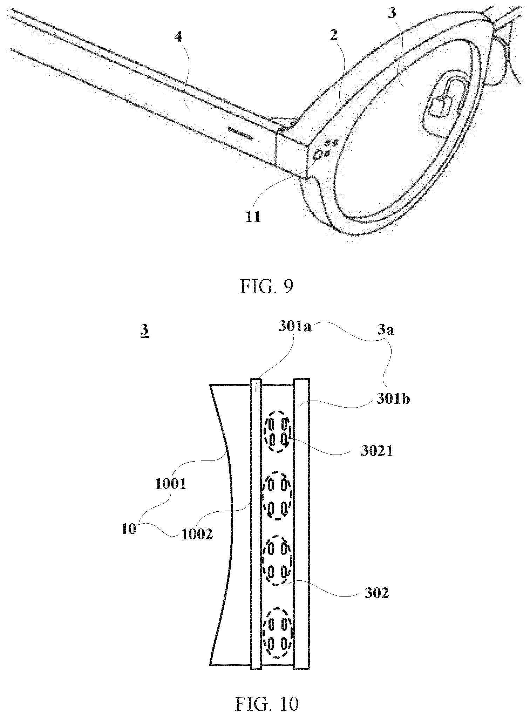

On this basis, in a possible embodiment of this application, the position of the gaze point 305 on the first lens layer 3a may be further determined based on a human-eye object-viewing distance. During specific implementation, in step 1, a human-eye object-viewing distance is obtained through smart sensing. The human-eye object-viewing distance may be obtained in a wireless telemetry manner, and may be but is not limited to being obtained by using various ranging sensors based on technologies such as an infrared technology and an ultrasonic technology. The ranging sensor 11 may be disposed at a corner of the glasses. In addition, because space of the frame 2 and the temples 4 of the glasses is relatively large, in some embodiments of this application, FIG. 9 is a schematic diagram of a partial structure of glasses according to a possible embodiment of this application. In this embodiment, the ranging sensor 11 may be alternatively disposed at a joint between the frame 2 and the temple 4, and may further cooperate with a pattern on the frame 2 or the temple 4, to implement good hiding performance and aesthetics.

Step 2: A visual mark (for example, a visual acuity chart) is placed on a table, and a person performs reading in a sitting posture in a top-down manner. Positions in which lines of sight of the human eyes at different reading distances pass through the first optical region of the first lens layer 3a are measured. A mapping relationship shown in Table 4 may be formed, for example, based on positions of corresponding gaze points 305 respectively on a left lens and a right lens when the human-eye object-viewing distance is 20 cm, 33 cm, or 50 cm. The mapping relationship is prestored in the memory of the glasses.

**Table 4**

| Object-viewing distance | Position of the gaze point on the left lens | Position of the gaze point on the right lens |
|---|---|---|
| 20 cm | (Lx1, Ly1) | (Rx1, Ry1) |
| 33 cm | (Lx2, Ly2) | (Rx2, Ry2) |
| 50 cm | (Lx3, Ly3) | (Rx3, Ry3) |

In this application, a central point of the lens may be set as an origin of coordinates of the lens. In addition, a direction of a connection line between two connection points between each of the temples on two sides and a lens on a corresponding side may be used as an x-axis, and a direction perpendicular to the connection line between the two connection points is used as a y-axis.

Step 3: Based on the human-eye object-viewing distance obtained in step 1 and the discrete data relationship in the foregoing table read by the processor, the processor may obtain the position of the gaze point 305 on the corresponding lens at the human-eye object-viewing distance through deduction, to obtain the position of the gaze point 305 on the first lens layer.

When the object-viewing distance is less than 20 cm, it is ultra-short distance reading, and data of 20 cm is directly used as a lens position through which the line of sight passes.

When the object-viewing distance falls between 20 cm and 33 cm, an approximate line-of-sight central position is deduced according to a linear relationship, and coarse adjustment is performed on the first optical region. It is assumed that the object-viewing distance is m centimeters. In this case, the position of the gaze point 305 on the left lens may be as follows:

$$Lx = Lx1 + (Lx2 - Lx1) * (m - 20)/(33 - 20);$$

and

$$Ly = Ly1 + (Ly2 - Ly1) * (m - 20)/(33 - 20).$$

Similarly, the position of the gaze point 305 on the right lens may be as follows:

$$Rx = Rx1 + (Rx2 - Rx1) * (m - 20)/(33 - 20);$$

and

$$Ry = Ry1 + (Ry2 - Ry1) * (m - 20)/(33 - 20).$$

When the object-viewing distance falls between 33 cm and 50 cm, the positions of the gaze points 305 on the two lenses may be obtained through calculation by using the foregoing similar method. Details are not described herein.

In addition, when the object-viewing distance is greater than 50 cm, it is approximately considered as a far-sighted state. In this case, the positions of the gaze points 305 on the lenses may be determined in a design manner used during prescription of conventional myopia prevention and control glasses.

It can be learned from the foregoing piecewise calculation process of the object-viewing distance that when the object-viewing distance is divided into more segments, errors of the positions that are of the gaze points 305 on the lenses 3 and that are obtained through deduction at a specific object-viewing distance are smaller.

In this embodiment of this application, the position of the gaze point 305 on the lens 3 may be obtained by measuring the object-viewing distance based on a mapping relationship between the object-viewing distance and the position of the gaze point 305 on the lens 3, to obtain the position of the gaze point 305 on the first lens layer 3a. In addition, the gaze point 305 is located in the first optical region, and the second optical region is located at the periphery of the first optical region. Therefore, in this way, the positions of the first optical region and the second optical region, and numbers of the liquid crystal lens regions included in the first optical region and the second optical region may be determined. The optical power of the liquid crystal region 3021 located in the first optical region may correspond to the myopia degree. In addition, the optical power of the liquid crystal region 3021 located in the second optical region is the defocus degree superposed on the corresponding myopia degree. The second optical region is used as a defocus region.

It may be understood that, in this application, the position of the first optical region may change with the position of the gaze point 305, and a position of the defocus region may also change adaptively with the position of the gaze point 305. Therefore, a visual axis of the human eye passes through the first optical region as much as possible, to better ensure sufficiently clear distant vision and peripheral defocus effect. In addition, because the human eye has pupillary distance adaptability, and different individuals have different pupillary distances, when the lens 3 provided in this application is used, the central region of the entire lens 3 can be moved and adjusted by dynamically adjusting the position of the defocus region of the first lens layer 3a of the lens 3, to meet personalized requirements of different positions of the optical central regions of the lenses 3 due to diversified pupillary distances of users.

In this application, the first lens layer 3a provided in the foregoing embodiment and a conventional solid-state concave lens may further jointly form the lens 3 of the glasses. In this application, for ease of description, the solid-state lens may be referred to as a second lens layer 10, and the second lens layer 10 and the first lens layer 3a may be stacked. In this way, in the lens 3, the first lens layer 3a may be enabled to provide a function of changing the positions of the first optical region and the second optical region and a function of adjusting the defocus degree, and the second lens layer 10 is configured to provide a basic optical power corresponding to the myopia degree of the user, to implement vision correction effect. In addition, it may be understood that, in some embodiments of this application, the peripheral defocus effect of the lens may be further implemented based on an optical power obtained after the optical power of the second optical region and the optical power of the second lens layer are superposed.

During specific implementation, refer to FIG. 10. FIG. 10 is a schematic diagram of a structure of a lens according to an embodiment of this application. In this embodiment, the second lens layer 10 is a plano-concave geometric optical lens, and includes a first face 1001 and a second face 1002 that are disposed opposite to each other. The first face 1001 is a concave face, and the second face 1002 is a flat face. The second face 1002 may be attached and connected to the first substrate 301a of the first lens layer 3a. The first lens layer 3a includes a plurality of liquid crystal regions 3021 arranged in an array. In each liquid crystal region 3021, there is electric field distribution formed by a voltage difference applied to the first sub-electrode 3031a shown in FIG. 5 and the peripheral second sub-electrode 3031b that is used as a common power supply electrode. When voltages applied on the first sub-electrode 3031a and the second sub-electrode 3031b are the same, liquid crystal molecules in each liquid crystal region 3021 do not deflect, and therefore no optical power is generated. In this case, the first lens layer is a flat lens and has no optical power. In addition, when the voltages applied on the first sub-electrode 3031a and the second sub-electrode 3031b are different, a voltage difference is generated between the first sub-electrode 3031a and the second sub-electrode 3031b, and electric field distribution may be formed in the liquid crystal region 3021. In this case, the liquid crystal molecules deflect and are arranged to produce an optical power, thereby generating lens effect.

When the lens 3 shown in FIG. 10 is used in zooming glasses, the optical power of the first optical region, the optical power of the second optical region, and the positions of the first optical region and the second optical region can be flexibly adjusted. During specific implementation, in step 1, a wireless connection path is established with the glasses by using the application software on the external terminal device such as a mobile phone, and the dioptric degree and the defocus degree of the user are set for the zooming glasses. When the glasses receive a command that is for setting the dioptric degree and the defocus degree and that is transmitted from the external terminal device such as a mobile phone, the processor converts the dioptric degree and the defocus degree into corresponding optical powers. A relationship between an optical power and a dioptric degree or a defocus degree in common optometry is that Optical power = (Dioptric degree or Defocus degree)/100.

In another possible embodiment of this application, a smart sensing module may be disposed on the glasses, to obtain displacement between each point of imaging at the retina 1 and ideal imaging by using the smart sensing module. Further, the displacement is converted into the myopia degree and the defocus degree, thereby implementing self-setting of the glasses. In addition, the smart sensing module may use any possible light tracking sensor, and includes but is not limited to a Shack-Hartmann wavefront sensor, a Tscherning sensor, and the like.

Step 2: Determine, by using the measurement sensor, a number of the liquid crystal region 3021 located in the first optical region. In this embodiment of this application, the second lens layer 10 implements the myopia degree. In this case, a part that is of the first lens layer 3a and that is located in the first optical region may be disposed as a flat lens, and the liquid crystal region 3021 included in the first optical region has no optical power. However, the optical power of the liquid crystal region 3021 located in the second optical region of the first lens layer 3a is the defocus degree superposed on the corresponding myopia degree, and the optical power of the liquid crystal region 3021 located in the second optical region is the defocus degree.

For example, the myopia degree is set to -300 degrees and the defocus degree is set to 200 degrees. The second lens layer 10 may be polished to implement the myopia degree of the user: -300 degrees during prescription. The optical power of the liquid crystal region 3021 located in the first optical region of the first lens layer 3a is 0, and the optical power of the liquid crystal region 3021 located in the second optical region is 200 degrees, so that defocus effect of an optical power difference between the first optical region and the second optical region is 2 D (or 200 degrees).

It may be understood that, in this embodiment of this application, the defocus degree of the liquid crystal region 3021 located in the second optical region of the first lens layer 3a may also be set to progressively change in the direction from the central region to the peripheral region. For example, the optical power of each liquid crystal region 3021 located in the second optical region and the distance to the gaze point 305 are in a linear progressive relationship. In this way, image jump interference caused due to a relatively large dioptric degree difference of an adjacent part of the second optical region of the entire lens 3 can be reduced, thereby improving use comfortableness of the user.

Step 3: The processor retrieves a corresponding control voltage amplitude and a corresponding voltage frequency from the memory based on the optical power of each liquid crystal region 3021, and transmits the control voltage amplitude and the voltage frequency to a voltage conversion unit corresponding to each liquid crystal region 3021, so that the voltage conversion unit outputs a voltage signal on a corresponding frequency. In this way, the liquid crystal regions 3021 located in the central region and the peripheral region produce preset optical powers.

The position of the first optical region of the lens 3 provided in this embodiment of this application may change with the position of the gaze point, and the position of the second optical region may also change adaptively with the position of the gaze point. Therefore, a visual axis of the human eye passes through the first optical region as much as possible, to better ensure sufficiently clear distant vision and peripheral defocus effect. In addition, because the human eye has pupillary distance adaptability, and different individuals have different pupillary distances, when the lens 3 provided in this application is used, the second lens layer 10 can be polished in a customized manner, and the central region of the second lens layer 10 is located right ahead the eyeball of the user by adjusting an assembly position. However, the position of the defocus region of the first lens layer 3a is dynamically adjusted, so that the first optical region of the entire lens 3 can be moved and adjusted, to meet personalized requirements of different positions of the first optical regions of the lenses 3 due to diversified pupillary distances of users.

It should be noted that both the optical power of the liquid crystal region 3021 located in the first optical region of the first lens layer 3a of the lens provided in this application and the defocus degree of the liquid crystal region 3021 located in the second optical region can be adjusted based on a voltage amplitude and a voltage frequency applied on a corresponding sub-electrode pair 3031. Therefore, when the first lens layer 3a provided in this application is used in the lens 3 shown in FIG. 10, the optical power of the liquid crystal region 3021 located in the second optical region of the first lens layer 3a of the lens 3 may be adjusted based on defocus tolerance and eyeball defocus statuses of different persons, to meet a personalized defocus requirement of the user and also meet a requirement of the user for a new defocus degree after axis ocuil elongation.

The lens provided in the foregoing embodiment of this application may be combined with the conventional solid-state concave lens to form the lens 3, or may be combined with another liquid crystal lens to form the lens 3. In this application, the lens 3 may further include the second lens layer 10, and the second lens layer 10 is a liquid crystal lens layer. In the lens 3 provided in this embodiment of this application, the first lens layer 3a may be enabled to provide a function of changing the positions of the first optical region and the second optical region and a function of adjusting the defocus degree. The second lens layer 10 is configured to provide the basic optical power corresponding to the myopia degree of the user, to achieve an objective of myopia correction. Because the liquid crystal lens has an advantage of an adjustable dioptric degree through zooming, the liquid crystal lens may be used for a user with relatively fast myopia aggravation, for example, a teenager. The liquid crystal lens is flexibly adjusted to adapt to a requirement of the user for an increasing myopia degree, or a multi-user scenario such as AR glasses or VR glasses, to be flexibly adjusted and adapt to users with different myopia degrees.

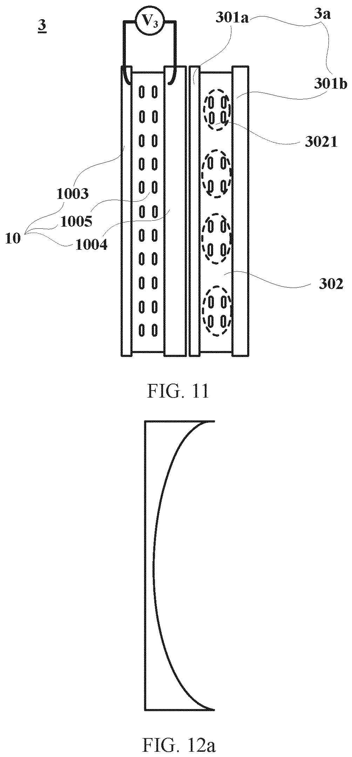

FIG. 11 is a schematic diagram of a structure of a lens 3 according to another embodiment of this application. In this embodiment, the second lens layer 10 includes a third substrate 1003, a fourth substrate 1004, and a liquid crystal layer 1005 located between the third substrate 1003 and the fourth substrate 1004. Liquid crystal molecules in the liquid crystal layer 1005 may deflect with an applied voltage, so that the second lens layer 10 produces and generates a uniform optical power. Generally, an optical power $\varphi_{max}$ that can be produced by the liquid crystal lens layer is limited by a material characteristic (birefringence index $\Delta n$) of the liquid crystal molecules, a thickness d of the liquid crystal layer, and a radius r of a lens aperture.

In this case, $$\varphi_{max} = \pm \frac{2d\Delta n}{r^2}.$$

Calculation is performed in a case in which the birefringence index $\Delta n$ of a commonly-used liquid crystal material is less than or equal to 0.3, the thickness d is less than or equal to 30 $\mu$m, and the radius of the lens aperture is 15 mm.

In this case, $$\varphi_{max} \leq \pm \frac{2*d\Delta n}{r^2} \leq \pm \frac{2 \times (30 \times 10^{-6}) \times 0.3}{(15 \times 10^{-3})^2} \leq 0.08.$$

It can be learned from the foregoing formula that, the aperture of the liquid crystal lens layer is changed to twice an original aperture, and the optical power is rapidly reduced to one fourth of an original optical power. When a radius of an aperture of a conventional lens is 15 mm, a maximum optical power of the conventional lens is only 0.08 D corresponding to 8 degrees when being converted into a dioptric degree, which is greatly different from a range of a myopia dioptric degree of the human eye.

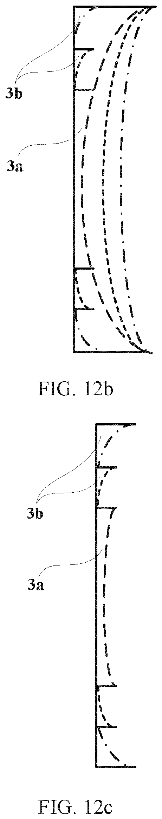

On this basis, the second lens layer 10 in this application may be disposed in Fresnel distribution. A working principle of a Fresnel lens is that refraction energy of a lens appears only on an optical surface (for example, a lens surface). In this way, the optical material may be removed as much as possible from the surface of the lens, and only curvature of the surface is kept. This looks like a part of an original continuous surface of the lens "slumps" to a plane. In this way, the thickness of the lens may be smaller in a case of the same optical power, or a larger optical power can be produced in a case of the same thickness. For ease of understanding a structure of a liquid crystal lens using Fresnel distribution, first refer to FIG. 12a. FIG. 12a shows a structure of a conventional solid-state concave lens according to a possible embodiment of this application. Then, refer to FIG. 12b. FIG. 12b shows a change of optical powers of different regions. In FIG. 12b, curved faces represented by using a same linetype have the same curvature.

In addition, with reference to FIG. 12c, in the second lens layer 10 shown in FIG. 12c, redundant materials are removed from a surface of the second lens layer 10, and only a plurality of sleeved annular regions (also referred to as Fresnel lobes) that are obtained by dividing the second lens layer 10 from the central region to the peripheral region are kept. An annular groove is formed between two adjacent annular regions. Original curvature is kept on a surface of each annular region. In this case, the second lens layer 10 looks like an original continuous surface of the second lens layer 10 "slumps" at each division part to the same plane, to form a series of sawtooth-shaped annular grooves.

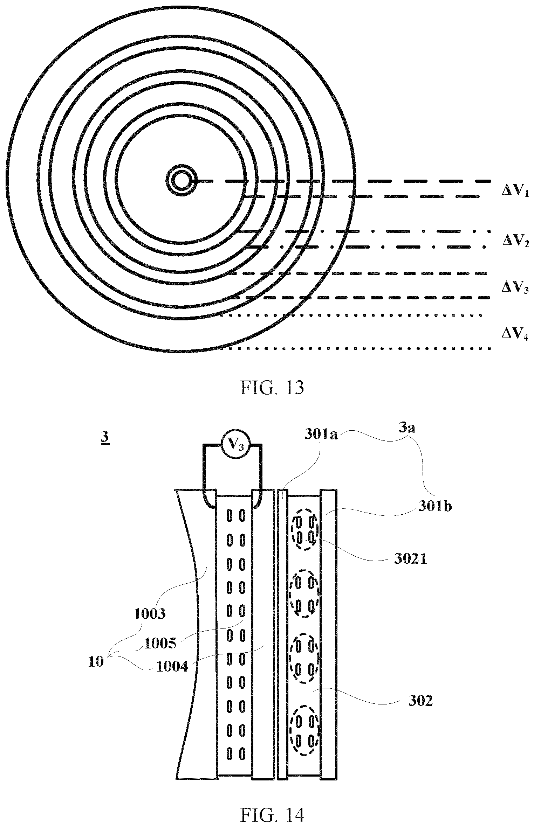

FIG. 13 is a cross-sectional view of potential distribution of the second lens layer 10 shown in FIG. 12c. In this embodiment of this application, annular sub-electrodes may be respectively formed at an inner ring and an outer ring of each annular region. In this embodiment, it may be understood that the annular sub-electrodes are in Fresnel spacing distribution. Still with reference to FIG. 12c, in this embodiment, corresponding voltages may be applied to annular sub-electrodes sequentially arranged in the direction from the central region to the peripheral region of the second lens layer 10. In the direction from the central region to the peripheral region, Fresnel lobe refractive index distribution may be formed between the center of the second lens layer 10 and a first annular sub-electrode, and the entire second lens layer 10 forms a liquid crystal lens with a relatively large aperture.

For example, to meet requirements of low-level and medium-level myopic people, the second lens layer 10 needs to support a zooming range from 0 degrees to -600 degrees, that is, 0 D to -6 D when being converted into an optical power.

In this case, $\varphi_{max} = \pm \frac{2d\Delta n}{R_1^2}$ .

A maximum optical power is $\varphi_{max}$, that is, -6 D (600 degrees of myopia). A birefringence index $\Delta n$ of a commonly-used liquid crystal material is 0.3. The thickness d is 30 $\mu$m. In this case, an obtained radius R1 of an aperture of the central region is 1.73 mm. An optical power that can be generated by the aperture of the actual central region is positive or negative, that is, -6 D to 6 D.

A design of lowering difficulty is that only $\varphi_{max}$ of the second lens layer 10 is required to be $\pm 3$ D, and the zooming range is from -3 D to +3 D. FIG. 14 is a schematic diagram of a structure of a second lens layer according to another embodiment of this application. In this embodiment, the third substrate 1003 of the second lens layer 10 may be processed to have a fixed optical power of -3 D. so that the zooming range of the second lens layer 10 is changed from -3 D - +3 D to 0 D - 6 D. In this case, an obtained radius R1 of an aperture of the central region is 2.45 mm.

In this embodiment of this application, to ensure that optical powers of all Fresnel lobes are the same, it needs to be ensured that optical path differences (optical path difference, OPD) generated by all the Fresnel lobes are the same.

In this case, $OPD = -\frac{R_n^2 - R_{n-1}^2}{2f} = -\frac{R_1^2}{2f}$ .

Herein, R1 is a radius of a first Fresnel lobe in the direction from the central region to the peripheral region, n is an $n^{th}$ Fresnel lobe, Rn is a radius of the $n^{th}$ Fresnel lobe, and f is a focal length of the Fresnel lobe. The foregoing formula may be simplified as follows:

$$R_n^2 = nR_1^2.$$

As shown in the foregoing cross-sectional view of the potential distribution in FIG. 13, an annular electrode is arranged in each Fresnel lobe, and a same voltage difference $\Delta V$ is applied in each annular region, so that all the Fresnel lobes produce the same optical power and are combined to obtain a complete Fresnel lens. In this application, a mapping relationship between a voltage difference $\Delta V$ and an optical power may be established, and is prestored in the memory.

When the lens 3 that is formed by combining the first lens layer 3a and the second lens layer 10 in this application is used in zooming glasses, the positions of the first optical region and the second optical region, and the optical powers of the first optical region and the second optical region can be flexibly adjusted. During specific implementation, in step 1, a wireless connection path is established with the glasses by using the application software on the external terminal device such as a mobile phone, and the dioptric degree and the defocus degree of the user are set for the zooming glasses. When the glasses receive a command that is for setting the dioptric degree and the defocus degree and that is transmitted from the external terminal device such as a mobile phone, the processor converts the dioptric degree and the defocus degree into corresponding optical powers. A relationship between an optical power and a dioptric degree or a defocus degree in common optometry is that Optical power = (Dioptric degree or Defocus degree)/100.

In another possible embodiment of this application, a smart sensing module may be disposed on the glasses, to obtain displacement between each point of imaging at the retina 1 and ideal imaging by using the smart sensing module. Further, the displacement is converted into the myopia degree and the defocus degree, thereby implementing self-setting of the glasses. In addition, the smart sensing module may use any possible light tracking sensor, and includes but is not limited to a Shack-Hartmann wavefront sensor, a Tscherning sensor, and the like.

Step 2: Determine, by using the measurement sensor, a number of the liquid crystal region 3021 located in the first optical region. In this embodiment of this application, the second lens layer 10 implements the myopia degree. In this case, a part that is of the first lens layer 3a and that is located in the first optical region may be disposed as a flat lens, and the liquid crystal region 3021 included in the first optical region has no optical power. However, the optical power of the liquid crystal region 3021 located in the second optical region of the first lens layer 3a is the defocus degree superposed on the corresponding myopia degree, and the optical power of the liquid crystal region 3021 located in the second optical region is the defocus degree.

Table 5 provides an example of a correspondence between a dioptric degree and a defocus degree in an embodiment of this application. For example, the myopia degree is set to - 300 degrees and the defocus degree is set to 200 degrees. The optical power of the second lens layer 10 is the myopia degree of the user: -300 degrees (that is, -3 D). The optical power of the liquid crystal region 3021 located in the first optical region of the first lens layer 3a is 0, and the liquid crystal region 3021 may be combined with the second lens layer 10 to produce the myopia degree of the human eye: -300 degrees. The optical power of the liquid crystal region 3021 located in the second optical region of the first lens layer 3a is 200 degrees, and the liquid crystal region 3021 may be combined with the second lens layer 10 to implement lens effect of-100 degrees. In this case, defocus effect with a difference of 200 degrees (or 2 D) is implemented based on the optical powers of the first optical region and the second optical region of the entire lens 3.

**Table 5**

| Myopia degree | Defocus degree | Optical power of a liquid crystal lens with a large aperture | Optical power of a microlens in an optical central region | Optical power of a microlens in an optical peripheral region |
|---|---|---|---|---|
| 0 degrees | 300 degrees | 0 degrees | 0 degrees | 300 degrees |
| | 250 degrees | 0 degrees | 0 degrees | 250 degrees |
| | 200 degrees | 0 degrees | 0 degrees | 200 degrees |
| -100 degrees | 300 degrees | -100 degrees | 0 degrees | 300 degrees |
| | 250 degrees | -100 degrees | 0 degrees | 250 degrees |
| | 200 degrees | -100 degrees | 0 degrees | 200 degrees |
| -300 degrees | 300 degrees | -300 degrees | 0 degrees | 300 degrees |
| | 250 degrees | -300 degrees | 0 degrees | 250 degrees |
| | 200 degrees | -300 degrees | 0 degrees | 200 degrees |
| -600 degrees | 300 degrees | -600 degrees | 0 degrees | 300 degrees |
| | 250 degrees | -600 degrees | 0 degrees | 250 degrees |
| | 200 degrees | -600 degrees | 0 degrees | 200 degrees |

It may be understood that, in this embodiment of this application, a defocus degree of the liquid crystal region 3021 located in the second optical region of the first lens layer 3a may also be set to progressively change in the direction from the central region to the peripheral region. For example, the optical power of each liquid crystal region 3021 located in the second optical region and the distance to the gaze point 305 are in a linear progressive relationship. In this way, image jump interference caused due to a relatively large dioptric degree difference of an adjacent part of the peripheral region of the entire lens 3 can be reduced, thereby improving use comfortableness of the user.

Step 3: The processor retrieves the corresponding control voltage amplitude and the corresponding voltage frequency from the memory based on the optical power of each liquid crystal region 3021 of the first lens layer 3a and the optical power of the second lens layer 10, and transmits the control voltage amplitude and the voltage frequency separately to voltage conversion units corresponding to the first lens layer 3a and the second lens layer 10, so that the corresponding voltage conversion unit outputs a voltage signal on a corresponding frequency. In this way, the central region and the peripheral region of the entire lens 3 produce preset optical powers.

The position of the first optical region of the lens 3 provided in this embodiment of this application may change with the position of the gaze point, and the position of the second optical region may also change adaptively with the position of the gaze point. Therefore, a visual axis of the human eye passes through the first optical region as much as possible, to better ensure sufficiently clear distant vision and peripheral defocus effect. In addition, because the human eye has pupillary distance adaptability, and different individuals have different pupillary distances, when the lens 3 provided in this application is used, the second lens layer 10 can be designed in a customized manner, and the central region of the second lens layer 10 is located right ahead the eyeball of the user by adjusting an assembly position. However, the position of the second optical region of the first lens layer 3a is dynamically adjusted, so that the first optical region of the entire lens 3 can be moved and adjusted, to meet personalized requirements of different positions of the first optical regions of the lenses 3 due to diversified pupillary distances of users.

It should be noted that, because the second lens layer 10 of the lens 3 provided in this embodiment of this application is a liquid crystal lens, an overall dioptric degree of the lens 3 may be adjusted by adjusting the optical power of the second lens layer 10, so that the lens 3 can adapt to a wearing requirement of the user, to avoid frequent glasses prescription. In addition, the optical power of the liquid crystal region 3021 located in the peripheral region of the first lens layer 3a may be further adjusted based on defocus tolerance and eyeball defocus statuses of different persons, to meet a personalized defocus requirement of the user and also meet a requirement of the user for a new defocus degree after axis ocuil elongation.

In another possible embodiment of this application, the first lens layer 3a shown in FIG. 5 may be alternatively combined with a liquid lens to form the lens 3. In this embodiment of this application, the first lens layer 3a and the second lens layer 10 may be stacked. In addition, the first lens layer 3a may be enabled to provide a function of changing the positions of the first optical region and the second optical region and a function of adjusting the defocus degree of the second optical region. The second lens layer 10 is configured to provide the basic optical power corresponding to the myopia degree of the user, to implement vision correction.

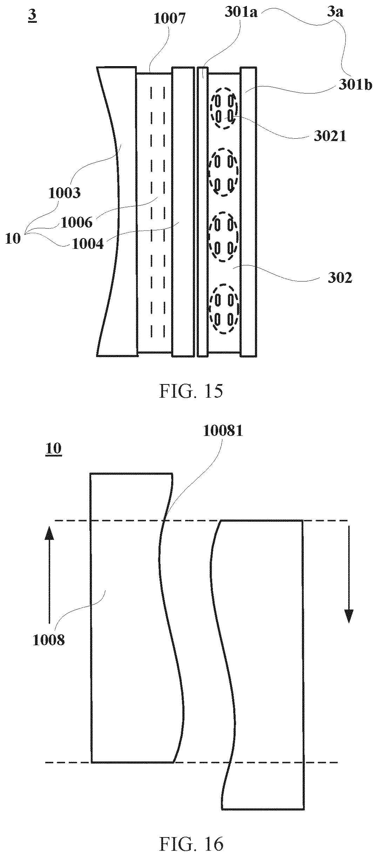

During specific implementation, FIG. 15 is a schematic diagram of a structure of a lens 3 according to another embodiment of this application. In this embodiment, the second lens layer 10 may include a third substrate 1003 and a fourth substrate 1004. The third substrate 1003 is an elastic thin-film substrate. The fourth substrate 1004 is a hard substrate. The third substrate 1003 may be made of, but is not limited to, an elastic material such as polydimethylsiloxane (polydimethylsiloxane, PDMS). The fourth substrate 1004 may be made of, but is not limited to, transparent materials such as polyethylene terephthalate (PET), polyethylene naphthalate (PEN), polyimide (PI), and polydimethylsiloxane (PDMS). The third substrate 1003 and the fourth substrate 1004 are snap-fitted, to form a liquid storage chamber between the third substrate 1003 and the fourth substrate 1004. In this embodiment of this application, the liquid storage chamber may be filled with an optical liquid 1006.

In some possible embodiments, to ensure a volume of the liquid storage chamber, a baffle 1007 may be further disposed between the third substrate 1003 and the fourth substrate 1004, and the baffle 1007 may be disposed around in a circle along edges of the third substrate 1003 and the fourth substrate 1004. The baffle 1007 is connected to the third substrate 1003 and the fourth substrate 1004. A connection manner may be but is not limited to bonding or the like. In this way, a closed liquid storage chamber is enclosed among the third substrate 1003, the fourth substrate 1004, and the baffle 1007. In addition, in this application, the baffle 1007 may be further provided with a liquid inlet and outlet passage. By using the liquid inlet and outlet passage, the optical liquid 1006 may be filled into the liquid storage chamber, or the optical liquid 1006 may be drained from the liquid storage chamber.

In this application, because the third substrate 1003 is an elastic thin-film substrate, as a volume of the optical liquid 1006 in the liquid storage chamber decreases, support force applied by the optical liquid 1006 to the third substrate 1003 decreases, so that the third substrate 1003 is concave towards the fourth substrate 1004. In this case, the second lens layer 10 has a concave lens structure. In addition, as the volume of the optical liquid 1006 in the liquid storage chamber increases, support force applied by the optical liquid 1006 to the third substrate 1003 increases, so that the third substrate 1003 can be deformed in a direction away from the fourth substrate 1004. When the volume of the optical liquid 1006 is large enough, the third substrate 1003 further protrudes in the direction away from the fourth substrate 1004, so that the second lens has a convex lens structure. Therefore, as the volume of the optical liquid 1006 in the liquid storage chamber changes, the optical power of the second lens layer 10 changes.

It can be learned from the foregoing description of the second lens layer 10 that, in this embodiment of this application, the liquid storage chamber of the second lens layer 10 may be filled with the optical liquid 1006. As the volume of the optical liquid 1006 in the liquid storage chamber changes, an optical power of the liquid storage chamber changes. Therefore, in this application, the liquid storage chamber may also be considered as a lens. In this case, the second lens layer 10 provided in this embodiment of this application may be considered as a combined structure of the two lenses: the second lens layer 10 and the liquid storage chamber. The optical power of the second lens layer 10 is a sum of optical powers of lenses used to form the second lens layer 10, and may be represented as follows:

$$\varphi = \varphi1 + \varphi2.$$

Herein, $\varphi1$ is the optical power of the third substrate 1003, and $\varphi2$ is the optical power of the liquid storage chamber. When an amount of the optical liquid 1006 in the liquid storage chamber decreases, an elastic thin film becomes concave to form a concave myopia lens. In this case, the optical power of the entire second lens layer 10 is a produced optical power of the concave third substrate 1003 superposed on the optical power of the liquid storage chamber.

When the lens 3 shown in FIG. 15 is used in zooming glasses, the optical power of the first optical region, the optical power of the second optical region, and the positions of the first optical region and the second optical region can be flexibly adjusted. During specific implementation, in step 1, a wireless connection path is established with the glasses by using the application software on the external terminal device such as a mobile phone, and the dioptric degree and the defocus degree of the user are set for the zooming glasses. When the glasses receive a command that is for setting the dioptric degree and the defocus degree and that is transmitted from the external terminal device such as a mobile phone, the processor converts the dioptric degree and the defocus degree into corresponding optical powers. A relationship between an optical power and a dioptric degree or a defocus degree in common optometry is that Optical power = (Dioptric degree or Defocus degree)/100.

In another possible embodiment of this application, a smart sensing module may be disposed on the glasses, to obtain displacement between each point of imaging at the retina 1 and ideal imaging by using the smart sensing module. Further, the displacement is converted into the myopia degree and the defocus degree, thereby implementing self-setting of the glasses. In addition, the smart sensing module may use any possible light tracking sensor, and includes but is not limited to a Shack-Hartmann wavefront sensor, a Tscherning sensor, and the like.

Step 2: Determine, by using the measurement sensor, a number of the liquid crystal region 3021 located in the first optical region. In this embodiment of this application, the second lens layer 10 implements the myopia degree. In this case, a part that is of the first lens layer 3a and that is located in the first optical region may be disposed as a flat lens, and the liquid crystal region 3021 included in the first optical region has no optical power. However, the optical power of the liquid crystal region 3021 located in the second optical region of the first lens layer 3a is the defocus degree superposed on the corresponding myopia degree, and the optical power of the liquid crystal region 3021 located in the second optical region is the defocus degree.

For example, the myopia degree is set to -300 degrees and the defocus degree is set to 200 degrees. The second lens layer 10 may be adjusted based on the volume of the optical liquid 1006 of the second lens layer 10, so that the optical power of the second lens layer 10 is the myopia degree of the user: -300 degrees. The optical power of the liquid crystal region 3021 located in the first optical region of the first lens layer 3a is 0, and the optical power of the liquid crystal region 3021 located in the second optical region is 200 degrees, so that defocus effect of an optical power difference between the first optical region and the second optical region is 2 D (or 200 degrees).

It may be understood that, in this embodiment of this application, the defocus degree of the liquid crystal region 3021 located in the second optical region of the first lens layer 3a may also be set to progressively change in the direction from the central region to the peripheral region. For example, the optical power of each liquid crystal region 3021 located in the second optical region and the distance to the gaze point 305 are in a linear progressive relationship. In this way, image jump interference caused due to a relatively large dioptric degree difference of an adjacent part of the second optical region of the entire lens 3 can be reduced, thereby improving use comfortableness of the user.

Step 3: The processor retrieves a corresponding control voltage amplitude and a corresponding voltage frequency from the memory based on the optical power of each liquid crystal region 3021, and transmits the control voltage amplitude and the voltage frequency to a voltage conversion unit corresponding to each liquid crystal region 3021, so that the voltage conversion unit outputs a voltage signal on a corresponding frequency. In this way, the liquid crystal regions 3021 located in the central region and the peripheral region produce preset optical powers.

The position of the first optical region of the lens 3 provided in this embodiment of this application may change with the position of the gaze point, and the position of the second optical region may also change adaptively with the position of the gaze point. Therefore, a visual axis of the human eye passes through the first optical region as much as possible, to better ensure sufficiently clear distant vision and peripheral defocus effect.

In addition, because the human eye has pupillary distance adaptability, and different individuals have different pupillary distances, when the lens 3 provided in this application is used, the second lens layer 10 can be disposed in a customized manner, and the central region of the second lens layer 10 is located right ahead the eyeball of the user by adjusting an assembly position. However, the position of the second optical region of the first lens layer 3a is dynamically adjusted, so that the first optical region of the entire lens 3 can be moved and adjusted, to meet personalized requirements of different positions of the first optical regions of the lenses 3 due to diversified pupillary distances of users.

It should be noted that, because the second lens layer 10 of the lens 3 provided in this application is a liquid lens, the optical power of the second lens layer 10 may be adjusted by adjusting the volume of the optical liquid 1006 in the liquid storage chamber, to adjust the dioptric degree of the entire lens 3, so that the lens 3 can adapt to a wearing requirement of the user, to avoid frequent glasses prescription. In addition, the optical power of the liquid crystal region 3021 located in the second optical region of the first lens layer 3a may be further adjusted based on defocus tolerance and eyeball defocus statuses of different persons, to meet a personalized defocus requirement of the user and also meet a requirement of the user for a new defocus degree after axis ocuil elongation.

In addition to the disposing manners provided in the foregoing embodiments, the second lens layer 10 provided in this application may be alternatively disposed in another possible structural form, provided that the second lens layer 10 can cooperate with the first lens layer 3a to implement setting of the myopia degree of the lens 3, to achieve an objective of myopia correction. In a possible embodiment of this application, with reference to FIG. 16, the second lens layer 10 may further include two solid-state lenses 1008. The two solid-state lenses 1008 each have a curved face 10081, and at least parts of the curved faces 10081 of the two solid-state lenses 1008 are disposed opposite to each other. In this way, the superposed parts (for example, a part between two dashed lines in FIG. 16) of the two solid-state lenses 1008 may jointly produce the optical power of the second lens layer 10.

In addition, because the curved faces 10081 of the two solid-state lenses 1008 are disposed at least partially relative to each other, as the two solid-state lenses 1008 move in a staggered manner in a direction of an arrow shown in FIG. 16, parts that are of the curved faces 10081 of the two solid-state lenses 1008 and that are disposed relative to each other may move in a staggered manner, so that an optical power of a superimposed part of the two solid-state lenses 1008 changes, thereby changing the optical power of the second lens layer 10.

When the second lens layer 10 shown in FIG. 16 and the first lens layer 3a are stacked, the optical power of the second lens layer 10 may be adjusted by adjusting a relative position of the two solid-state lenses 1008 of the second lens layer 10, to adjust the dioptric degree of the entire lens 3, so that the lens 3 can adapt to a wearing requirement of the user, to avoid frequent glasses prescription. In addition, the optical power of the liquid crystal region 3021 located in the second optical region of the first lens layer 3a may be further adjusted based on defocus tolerance and eyeball defocus statuses of different persons, to meet a personalized defocus requirement of the user and also meet a requirement of the user for a new defocus degree after axis ocuil elongation.

It should be noted that, in some possible embodiments of this application, for the second lens layer 10 with adjustable optical power provided in the foregoing embodiments, for example, the liquid lens layer, the liquid crystal lens layer, or the solid-state lens group shown in FIG. 16, a ranging sensor may be further disposed on the frame of the glasses. The ranging sensor may be configured to measure a human-eye object-viewing distance. The human-eye object-viewing distance is a distance between the human eye and a target object at which the human eye gazes. In this way, the optical power of the second lens layer 10 may be adjusted based on the human-eye object-viewing distance measured by the ranging sensor. During specific implementation, the human-eye object-viewing distance may be first obtained. Then, the optical power of the second lens layer is determined based on the human-eye object-viewing distance and a relational function of a polynomial of a high degree in a single indeterminate.

In a possible implementation of this application, the relational function of the polynomial of a high degree in a single indeterminate may be obtained through fitting of a plurality of groups of discrete data. The discrete data includes a correspondence between the human-eye object-viewing distance and the optical power.

According to the lens adjustment method provided in this application, the optical power of the second lens layer of the lens may change with the human-eye object-viewing distance according to the relational function of the polynomial of a high degree in a single indeterminate between the human-eye object-viewing distance and the optical power of the second lens layer. In this way, the second lens layer can adapt to a requirement of a change of a human-eye adjustment burden at different human-eye object-viewing distances, thereby improving myopia prevention and control effect of the lens.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be alternatively stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be alternatively loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A lens, comprising a first lens layer, wherein the first lens layer comprises a plurality of liquid crystal regions, at least one liquid crystal region forms a first optical region at the first lens layer, at least one liquid crystal region forms a second optical region at the first lens layer, the second optical region is disposed around the first optical region, and an optical power of the first optical region is different from an optical power of the second optical region.

2. The lens according to claim 1, wherein a gaze point of a human eye is located in the first optical region, and positions of the first optical region and the second optical region change with a change of a position of the gaze point on the lens.

3. The lens according to claim 1 or 2, wherein the first lens layer comprises a first substrate, a second substrate, a first electrode, and a second electrode;

   the first electrode is disposed on the first substrate, the second electrode is disposed on the second substrate, the second electrode comprises a plurality of sub-electrode pairs, each sub-electrode pair comprises a first sub-electrode and a second sub-electrode, and the second sub-electrode is an annular electrode, and there is a voltage difference between the first sub-electrode and the second sub-electrode in each sub-electrode pair; and the plurality of liquid crystal regions are disposed between the first substrate and the second substrate, the plurality of liquid crystal regions are disposed in a one-to-one correspondence with the plurality of sub-electrode pairs, the second sub-electrode in each sub-electrode pair is correspondingly disposed for an edge of the liquid crystal region, each liquid crystal region comprises liquid crystal molecules, and the liquid crystal molecules are capable of deflecting with the voltage difference of the corresponding sub-electrode pair.

4. The lens according to any one of claims 1 to 3, wherein an optical power of the liquid crystal region in the first optical region is zero.

5. The lens according to any one of claims 1 to 4, wherein optical powers in the second optical region progressively increase in a direction from the first optical region to the second optical region.

6. The lens according to claim 5, wherein each liquid crystal region located in the second optical region produces one optical power, and optical powers of the liquid crystal regions located in the second optical region progressively increase in the direction from the first optical region to the second optical region.

7. The lens according to any one of claims 1 to 6, wherein the lens further comprises a second lens layer, and the first lens layer and the second lens layer are stacked.

8. The lens according to claim 7, wherein the second lens layer is a solid-state concave lens layer, the second lens layer comprises a first face and a second face that are disposed opposite to each other, the first face is a concave face, the second face is a flat face, and the first lens layer is located on a side that is of the second face and that is away from the first face.

9. The lens according to claim 7, wherein the second lens layer comprises two solid-state lenses, each solid-state lens has a curved face, and curved faces of the two solid-state lenses are disposed at least partially relative to each other.

10. The lens according to claim 7, wherein the second lens layer is a liquid lens layer.

11. The lens according to claim 7, wherein the second lens layer is a liquid crystal lens layer.

12. The lens according to claim 11, wherein in a direction from a central region to a peripheral region, the second lens layer comprises a plurality of sleeved annular Fresnel lobes, at least one annular Fresnel lobe comprises a plurality of annular Fresnel sub-lobes, and the plurality of annular Fresnel sub-lobes have a same optical power.

13. A lens adjustment method, wherein the lens comprises a first lens layer, the first lens layer comprises a plurality of liquid crystal regions, and the adjustment method comprises:

    obtaining a position of a gaze point of a human eye on the first lens layer;
    determining positions of a first optical region and a second optical region based on the position of the gaze point on the first lens layer, wherein the gaze point is located in the first optical region, and the second optical region is located at a periphery of the first optical region;
    determining, based on the positions of the first optical region and the second optical region, the liquid crystal region comprised in the first optical region and the liquid crystal region comprised in the second optical region; and
    controlling the liquid crystal region in the first optical region to produce a first optical power, and controlling the liquid crystal region in the second optical region to produce a second optical power, wherein the first optical power is different from the second optical power.

14. The method according to claim 13, wherein the controlling the liquid crystal region in the second optical region to produce a second optical power comprises:
    controlling to produce a plurality of sequentially increasing second optical powers in the second optical region in a direction from the first optical region to the second optical region, wherein each second optical power is produced by one or more liquid crystal regions.

15. The method according to claim 13 or 14, wherein the lens is used in glasses, the glasses further comprise a light source, and the obtaining a position of a gaze point of a human eye on the first lens layer comprises:

    transmitting a light beam to the human eye by using the light source;
    obtaining a position of a bright spot formed by the light beam on an eyeball surface of the human eye;
    obtaining a relative position between a pupil center and the bright spot; and
    determining the position of the gaze point on the first lens layer based on the relative position between the pupil center and the bright spot.

16. The method according to claim 13 or 14, wherein the obtaining a position of a gaze point of a human eye on the first lens layer comprises:

    obtaining a human-eye object-viewing distance, wherein the human-eye object-viewing distance is a distance between the human eye and a target object at which the human eye gazes; and
    obtaining the position of the gaze point on the first lens layer based on the human-eye object-viewing distance and a preset mapping relationship.

17. The method according to any one of claims 13 to 16, wherein the lens further comprises a second lens layer, the second lens layer and the first lens layer are stacked, and the method further comprises:

    obtaining the human-eye object-viewing distance, wherein the human-eye object-viewing distance is the distance between the human eye and the target object at which the human eye gazes; and
    determining an optical power of the second lens layer based on the human-eye object-viewing distance and a relational function of a polynomial of a high degree in a single indeterminate.

18. A control apparatus, comprising a processor and a memory, wherein the memory stores program code, and when the program code is executed by the processor, the method according to any one of claims 13 to 17 is implemented.

19. Glasses, comprising the lens according to any one of claims 1 to 12.

20. The glasses according to claim 19, wherein the glasses further comprise the control apparatus according to claim 18.

21. The glasses according to claim 19 or 20, wherein the glasses further comprise a frame and temples, and the lens is connected to the frame and the temple.

22. The glasses according to claim 21, wherein the glasses further comprise a light source and a gaze angle measurement sensor, the light source is configured to transmit a light beam to the human eye, the gaze angle measurement sensor is configured to obtain a position of a bright spot formed by the light beam on an eyeball surface of the human eye, and the position of the bright spot is used for determining a position of a gaze point of the human eye on the lens.

23. The glasses according to claim 22, wherein the light source and the gaze angle measurement sensor are disposed on the frame.

24. The glasses according to any one of claims 19 to 23, wherein the glasses further comprise a ranging sensor, and the ranging sensor is configured to measure the human-eye object-viewing distance.

FIG. 1a

FIG. 1b

FIG. 1c

FIG. 2a

FIG. 2b

FIG. 3a

FIG. 3b

3a

FIG. 4

3a

FIG. 5

FIG. 6

FIG. 7

Line of sight     Line of sight

305

FIG. 8a

Line of sight

305

FIG. 8b

FIG. 9

FIG. 10

FIG. 11

FIG. 12a

3b

3a

FIG. 12b

3b

3a

FIG. 12c

$\Delta V_1$

$\Delta V_2$

$\Delta V_3$

$\Delta V_4$

FIG. 13

FIG. 14

FIG. 15

FIG. 16

## INTERNATIONAL SEARCH REPORT

| International application No. |
| --- |
| **PCT/CN2022/115406** |

**A. CLASSIFICATION OF SUBJECT MATTER**

G02C 7/08(2006.01)i; G02C 7/02(2006.01)i; G02B 26/08(2006.01)i

According to International Patent Classification (IPC) or to both national classification and IPC

**B. FIELDS SEARCHED**

Minimum documentation searched (classification system followed by classification symbols)

G02B,G02C

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, VEN, CJFD: 镜片, 透镜, 第一, 第1, 第二, 第2, 焦距, 光焦度, 屈光度, 屈折, 调, 变, 周, 围, 边缘, 光学中心, 视点, 瞳孔, 眼, 液晶, 液体, lens+, first+, 1st, second+, 2nd, focal+, focus+, diopt+, power+, adjust+, regulat+, verif+, modulat+, accommodat+, around+, surround+, encircl+, circum+, edg+, border+, optic+, center+, view+, point+, vision+, pupil+, eye+, liquid+, crystal+, LC+

**C. DOCUMENTS CONSIDERED TO BE RELEVANT**

| Category* | Citation of document, with indication, where appropriate, of the relevant passages | Relevant to claim No. |
| --- | --- | --- |
| X | TW 202101070 A (SIGHTGLASS VISION, INC.) 01 January 2021 (2021-01-01) description, paragraphs 55-113, and figures 1-7 | 1-12, 19, 21-24 |
| Y | TW 202101070 A (SIGHTGLASS VISION, INC.) 01 January 2021 (2021-01-01) description, paragraphs 55-113, and figures 1-7 | 13-18, 20 |
| Y | TW 201935089 A (ADLENS LTD.) 01 September 2019 (2019-09-01) description, paragraphs 93-200, and figures 1-30 | 13-18, 20 |
| X | CN 113391464 A (FUDAN UNIVERSITY) 14 September 2021 (2021-09-14) description, paragraphs 61-66, and figures 1-8 | 1-12, 19, 21-24 |
| Y | CN 113391464 A (FUDAN UNIVERSITY) 14 September 2021 (2021-09-14) description, paragraphs 61-66, and figures 1-8 | 13-18, 20 |
| A | CN 109669277 A (SPRING FOUNDATION OF NCTU) 23 April 2019 (2019-04-23) entire document | 1-24 |
| A | CN 108490704 A (BOE TECHNOLOGY GROUP CO., LTD.) 04 September 2018 (2018-09-04) entire document | 1-24 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 November 2022** | **05 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/115406** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2018356704 A1 (BEAM ENGINEERING FOR ADVANCED MATERIALS CO.) 13 December 2018 (2018-12-13)<br>    entire document | 1-24 |
| A | TW 201520643 A (SOUTHERN TAIWAN UNIVERSITY OF SCIENCE AND TECHNOLOGY) 01 June 2015 (2015-06-01)<br>    entire document | 1-24 |

Form PCT/ISA/210 (second sheet) (January 2015)

**INTERNATIONAL SEARCH REPORT**
Information on patent family members

International application No.

**PCT/CN2022/115406**

| Patent document cited in search report | | | Publication date (day/month/year) | Patent family member(s) | | | Publication date (day/month/year) |
|---|---|---|---|---|---|---|---|
| TW | 202101070 | A | 01 January 2021 | SG | 11202110890 Y | A | 28 October 2021 |
| | | | | AU | 2020261009 | A1 | 28 October 2021 |
| | | | | EP | 3958789 | A1 | 02 March 2022 |
| | | | | GB | 202116510 | D0 | 29 December 2021 |
| | | | | US | 2022252904 | A1 | 11 August 2022 |
| | | | | KR | 20210151829 | A | 14 December 2021 |
| | | | | CN | 113727673 | A | 30 November 2021 |
| | | | | CA | 3137950 | A1 | 29 October 2020 |
| | | | | IL | 287382 | A | 01 December 2021 |
| | | | | JP | 2022529515 | A | 22 June 2022 |
| | | | | WO | 2020219518 | A1 | 29 October 2020 |
| TW | 201935089 | A | 01 September 2019 | US | 2020341172 | A1 | 29 October 2020 |
| | | | | GB | 201800933 | D0 | 07 March 2018 |
| | | | | WO | 2019141990 | A1 | 25 July 2019 |
| CN | 113391464 | A | 14 September 2021 | None | | | |
| CN | 109669277 | A | 23 April 2019 | TW | I637213 | B | 01 October 2018 |
| | | | | US | 2019113771 | A1 | 18 April 2019 |
| CN | 108490704 | A | 04 September 2018 | US | 2019302567 | A1 | 03 October 2019 |
| US | 2018356704 | A1 | 13 December 2018 | None | | | |
| TW | 201520643 | A | 01 June 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111101862X